(19) Europäisches Patentamt
European Patent Office
Office européen des brevets

(11) **EP 4 460 679 B1**

(12) **EUROPEAN PATENT SPECIFICATION**

(45) Date of publication and mention
of the grant of the patent:
**15.10.2025 Bulletin 2025/42**

(21) Application number: **23700422.1**

(22) Date of filing: **04.01.2023**

(51) International Patent Classification (IPC):
***G01D 5/353*** (2006.01)

(52) Cooperative Patent Classification (CPC):
**G01D 5/35361; G01D 5/35364**

(86) International application number:
**PCT/EP2023/050121**

(87) International publication number:
**WO 2023/131624 (13.07.2023 Gazette 2023/28)**

(54) **OPTICAL MEASUREMENT SYSTEM**

OPTISCHES MESSSYSTEM

SYSTÈME DE MESURE OPTIQUE

(84) Designated Contracting States:
**AL AT BE BG CH CY CZ DE DK EE ES FI FR GR
HR HU IE IS IT LI LT LU LV MC ME MK MT NL NO
PL PT RO RS SE SI SK SM TR**

(30) Priority: **07.01.2022 GB 202200142**

(43) Date of publication of application:
**13.11.2024 Bulletin 2024/46**

(73) Proprietor: **Sintela Limited
Bristol BS20 0DH (GB)**

(72) Inventor: **RUSSELL, Stuart
Bristol BS20 0DH (GB)**

(74) Representative: **Mewburn Ellis LLP
Aurora Building
Counterslip
Bristol BS1 6BX (GB)**

(56) References cited:
**WO-A1-2017/037453    WO-A1-2017/077257
WO-A1-2020/016556    CN-A- 110 470 327
GB-A- 2 588 177**

**Description**

<u>TECHNICAL FIELD</u>

The invention relates to an optical measurement system, for performing measurements on an optical path such as an optical fibre.

<u>BACKGROUND TO THE INVENTION</u>

There exist various techniques for measuring properties of an optical fibre using pulsed laser light transmitted along the optical fibre. These techniques make use of different scattering mechanisms within the optical fibre.

*Distributed Acoustic Sensing*

Distributed Acoustic Sensing (DAS) is an established technology with several commercial systems available. In these systems, a pulse or pulses of laser light are launched into a length of optical fibre and the light that is scattered within the fibre is analysed in order to derive the nature of the acoustic environment, i.e. any physical vibrations, of the fibre transducer. In particular, these systems typically make a measurement of the acoustic strain environment of an optical fibre transducer using an optical time domain reflectometer (OTDR) approach. This gives a differential strain measurement as a function of position along the optical fibre.

As an optical fibre is manufactured it is cooled or quenched from a high temperature as it is drawn. This process leads to the presence of small variations in the density of the optical fibre. These tiny variations in density equate to variations in the effective refractive index of the fibre. These discontinuities lead to scattering of laser light passing through the optical fibre, particularly by Rayleigh scattering. The amplitude of the scattering follows a Rayleigh distribution, but the phase angle of the scattering is uniformly distributed around a unit circle, i.e. $-\pi \leq \Phi \leq \pi$ where $\Phi$ is the phase angle.

Rayleigh scattering is an elastic scattering mechanism, such that the frequency of the scattered light is the same as the pulse of laser light used to probe the optical fibre. However, since the probe pulse is highly coherent, the scattered light interferes with itself as it scatters along the optical fibre. The bandwidth required to detect and fully utilise the Rayleigh scatter for DAS sensing is inversely proportional to the pulse duration. For typical applications, this bandwidth is of the order of 30 MHz to 200 MHz.

*Distributed Temperature Sensing*

Distributed Temperature Sensing (DTS) is a technique for measuring temperature along an optical fibre using a laser pulse which is transmitted along the optical fibre. DTS typically involves detecting Raman scattering of the laser pulse in the optical fibre. Unlike Rayleigh scattering, Raman scattering is an inelastic mechanism. When a pulse propagates along the fibre, a small portion of the incident photons interact with molecular bonds of the material constituting the fibre. These photons can excite vibrations of the molecular bonds of the material. These vibrating molecules will then scatter the photon, typically to a lower energy with the emission of an optical phonon. This scattering mechanism is termed Stokes Scattering. However, if a photon interacts and scatters from an already excited molecule, then it may scatter by absorbing a phonon and thus scatter to a higher energy. This is termed Anti-Stokes Scattering.

The frequency shift associated with Raman scattering is dependent on the material from which the fibre is constructed.

For example, for Silica fibres, the frequency shift is typically of the order of 13 THz, which for a probe pulse at 1550 nm results in a wavelength shift of the order of 100nm. The bandwidth of the scattering mechanism is also very wide, typically greater than 10THz.

Raman scattering can be utilised for temperature sensing, due to the fact that the probability of Anti-Stokes scattering (i.e. scattering to a higher energy) is highly temperature dependent. In particular, the ratio of Stokes/Anti-Stokes scattering is related to the temperature of the fibre, such that the temperature of the fibre can be determined by measuring the Stokes/Anti-Stokes ratio.

*Distributed strain and Temperature Sensing*

Distributed Strain and Temperature Sensing (DSTS) is a technique that enables simultaneous measurement of temperature and strain in an optical fibre, using a laser pulse which is transmitted along the optical fibre. The scattering mechanism of interest for DSTS is Brillouin scattering. Like Raman scattering, Brillouin is an inelastic scattering process. However, instead of involving scattering from optical band phonon from vibrations of the chemical bonds, this Brillouin is due to photons interacting with and scattering from acoustic band phonons created by the lattice vibrations of the fibre material. The phonon energy is therefore much lower than in Raman scattering and hence the Stokes shift is also much lower, typically at around 10 to 11GHz.

Unlike Raman scattering, the amplitude of the Stokes and Anti-Stokes components for Brillouin scattering are approximately equal, at least in the spontaneous domain. At higher launch powers, Brillouin scattering can be stimulated whereby the Stokes component is amplified relative to the Anti-Stokes. Since this scattering is related to lattice vibrations, both the Stokes shift and the spontaneous amplitude of the Stokes and Anti-Stokes emission are related to the strain experienced by the fibre and the absolute temperature of the fibre. Signals related to temperature and strain of the optical fibre can be separated by measuring the frequency and amplitude of the Anti-Stokes emission.

CN110470327A discloses an optical time domain analyzer where a modulated light pulse is amplified by a non-linear amplifier and then filtered by the first band-pass filter to remove the amplifier's spontaneous radiation noise. WO2017037453A1 discloses apparatus for distributed fibre optic sensing having an optical generator for generating a coded sequence of optical radiation to be launched into a sensing optical fibre (302), and a detector for detecting optical radiation which has been Rayleigh backscattered. WO2020016556A1 discloses apparatus for distributed fibre optic sensing having a modulator which modulates radiation from an optical source to interrogate a sensing optical fibre with a first interrogation pulse at a first frequency and a second interrogation pulse at a second, different, frequency, both different in frequency from a local oscillator. WO2017077257A1 discloses a method for digitally processing a signal generated by an optoelectronic distributed measuring device based on Brillouin scattering.

SUMMARY OF THE INVENTION

At its most general, the present invention involves implementing DAS, together with DTS and/or DSTS using a single measurement system. In particular, the inventors have realised that it is possible to perform DAS, DTS and DSTS measurements on a same optical fibre and using a single light source. In contrast, conventionally, if it is desired to perform simultaneous DAS, DTS and/or DSTS measurements, then separate optical systems are used for each measurement, resulting in a complex and expensive optical setup. Indeed, in view of the different scattering mechanisms involved in each measurement technique, as well as the different detection bandwidths and frequencies required for these techniques, it is common practice to use a different measurement system for each technique. Additionally, this may require the use of multiple optical fibres which, in many installations would not be practical.

Using a single measurement system for implementing these different measurement techniques may reduce an amount and cost of hardware which is required for performing the measurements. In particular, sharing the same optical fibre and many optical components between the measurement techniques may avoid redundancy in the equipment needed for the different techniques. In particular, the inventors have found that DAS and DSTS measurements can share a common detector and acquisition stage. The measurement system of the invention may have a greater flexibility compared to conventional system, as it enables multiple measurement techniques to be implemented, depending on the properties of the optical fibre that are to be measured. Thus, it is possible to use different measurement techniques even in cases where it would not be practical to install multiple optical fibres.

DAS measurements can be used to obtain a spatial differential of the strain and/or rate of temperature change at positions along the optical fibre. However, DAS measurements do not typically yield absolute values of the strain or temperature. On the other hand, DTS measurements can yield absolute values of the temperature, whilst DSTS measurements can yield absolute values of strain and temperature. Therefore, by implementing DAS with DTS and/or DSTS the results obtained from the different measurement techniques may be used to complement one another, and may improve the accuracy and reliability with which strain and/or temperature can be determined for the optical fibre.

A first aspect of the invention provides an optical measurement system that enables combination of DAS and DSTS measurements. According to the first aspect of the invention, there is provided an optical measurement system comprising: a coherent light source configured to generate a light signal; a launch stage configured to receive the light signal from the light source and generate a pulsed test signal and launch the test signal along an optical path; a local oscillator stage configured to generate a local oscillator signal, wherein local oscillator signal comprises a first local oscillator component and a second local oscillator component which is frequency-shifted relative to the first local oscillator component; and a first detector stage configured to: receive the local oscillator signal from the local oscillator stage and a scattered signal from the optical path, wherein the scattered signal comprises a Rayleigh scattering component and a Brillouin scattering component; and interfere the local oscillator signal with the scattered signal to produce an output signal having a first component at a first frequency corresponding to a frequency difference between the first local oscillator component and the Rayleigh scattering component, and a second component at a second frequency corresponding to a frequency difference between the second local oscillator component and the Brillouin scattering component.

The first aspect of the invention is based on the realisation that, although Brillouin scattering is at a much higher frequency compared to Rayleigh scattering, the bandwidth for Brillouin scattering is relatively small and of a same order of magnitude as the bandwidth for Rayleigh scattering. Therefore, by generating a second local oscillator component which is frequency-shifted (e.g. to a frequency that is closer to that of the Brillouin scattering), it is possible to bring the second component of the output signal down to a frequency which is closer to that of the original test signal (which is the frequency at which Rayleigh scattering is observed). As a result, the same detector stage (and acquisition system) can be used for detecting both Rayleigh scattering and Brillouin scattering.

The coherent light source may be a laser or other suitable narrow linewidth source. The light signal corresponds to light that is emitted by the light source. The light signal may also be referred to as a carrier signal. The light source may be configured to emit a continuous wave of coherent light.

Light emitted by the light source may be split (e.g. by a beam-splitter), such that a first portion of the light is conveyed to the launch stage and a second portion of the light is conveyed to the local oscillator stage. In other words, the light source may be coupled to the launch stage and the local oscillator stage via a beam-splitter, such that the light signal is received at both the launch stage and the local oscillator stage.

The launch stage is configured to generate the test signal in response to receiving the light signal from the light source. The launch stage may include any suitable component(s) for generating the pulsed test signal based on the light signal. For example, the launch stage may include a pulse generator, which is configured to generate the pulsed test signal from the received light signal. By way of example, the pulse generator may comprise an acousto-optic modulator (AOM), an electro-optic modulator (EOM), an IQ modulator, a solid state optical amplifier (SOA), and/or any other suitable type of pulse generator. In some cases, the pulse generator may comprise a single sideband modulator (SSB), e.g. implemented by an IQ modulator driven as a single sideband modulator. A duration of the pulsed test signal may be set based on various considerations, such as a length of the optical path and a desired measurement resolution. As an example, the pulsed test signal may have a duration between 5 ns and 100 ns, but need not be limited to this range.

The launch stage is further configured to launch the pulsed test signal along the optical path. Thus, an output of the launch stage may be connectable (or connected) to the optical path, so that the test signal can be transmitted to the optical path. For example, the launch stage may comprise a connector for connecting the output of the launch stage to the optical path.

The optical path may comprise an optical fibre. As discussed above, the optical fibre may act as a transducer for DAS, DSTS and DTS measurements. In some cases, the optical path (e.g. optical fibre) may form part of the optical measurement system.

The local oscillator stage is configured to generate the local oscillator signal. The local oscillator signal includes a first component and a second, frequency-shifted component. In other words, at least one of the first and second local oscillator components is frequency-shifted relative to the light source. Thus, the second local oscillator signal may correspond to a frequency-shifted copy of the light signal. For example, the local oscillator stage may be configured to generate two copies of the light signal, and to apply a frequency shift to one of the two copies. The local oscillator stage may include any suitable arrangement of optical and electronic elements to generate the two components of the local oscillator signal.

Preferably, the first local oscillator component is not frequency-shifted relative to the light source and the second local oscillator component is frequency-shifted relative to the light source. In other words, there may be a 0 Hz frequency shift between the first local oscillator component and the light signal, and a non-zero frequency shift between the second local oscillator signal and the light signal. However, as discussed below, a frequency shift may be in some cases be applied to the first local oscillator component.

The local oscillator stage may be configured to receive the light signal from the light source. In this manner the local oscillator stage may generate the local oscillator signal based on the received light signal, e.g. by generating two copies of the light signal as mentioned above. Alternatively, a separate light source may be used by the local oscillator stage for generating the local oscillator signal.

The optical path (e.g. optical fibre) may include a plurality of scattering sites distributed along the length of the optical path, e.g. caused by variations in refractive index along the length of the optical path. When a pulse of the pulsed test signal travels along the optical path (e.g. optical fibre), light in the pulse may be scattered at various locations (i.e. at the scattering sites) along the length of the optical path. In particular, light in the pulse may be backscattered via Rayleigh scattering and by Brillouin scattering of the pulse at various locations along the length of the optical path. Scattering of light in the pulse at a location along the optical path may result in a scattered signal associated with that location. Thus, a pulse of the test signal travelling along the optical path may result in a plurality of scattered signals, each scattered signal having been scattered at a respective location (i.e. scattering site) along the optical path. The scattered signals may be guided back along the optical path, such that they are received by the detector stage. Moreover, each scattered signal will have a Rayleigh scattering component (i.e. which results from Rayleigh scattering of the test signal), and a Brillouin scattering component (i.e. which results from Brillouin scattering of the test signal).

The optical path (e.g. optical fibre) may be subjected to different conditions at locations along the optical path, such as acoustic modulations and/or temperature changes. Such variations in conditions along the optical path may cause changes in the scattering of the pulsed test signal, e.g. due to local variations in refractive index and length of the optical path.

The location on the optical path at which the scattered signal was scattered may be determined based on a time of receipt of the scattered signal at the detector stage. For example, the location on the optical path may be determined by comparing a time at which a pulse of the test signal was launched along the optical path, and the time of receipt of the scattered signal at the detector stage, taking into account the speed of light along the optical path.

The first detector stage is configured to receive the scattered signal from the optical path. Thus, the first detector stage may be connectable (or connected) to the optical path. For example, the first detector stage may include a connector for connecting an input of the detector stage to the optical path. Note that the term 'first' here is used to identify (or name) the detector stage, and does not imply the presence of multiple detector stages.

As noted above, the scattered signal will include a Rayleigh scattering component and a Brillouin scattering component, which result from respective scattering mechanisms in the optical path. The Rayleigh scattering component will be at a same frequency as the test signal, as Rayleigh scattering is an elastic scattering process. The Brillouin scattering component will be frequency shifted relative to the test signal, due to the inelastic nature of Brillouin scattering. Therefore, the Rayleigh scattering component and the Brillouin scattering component of the scattered signal can be distinguished based on their frequencies. In particular, the Rayleigh scattering component may be at a frequency corresponding to that of the test signal, whilst the Brillouin scattering component may have a frequency that is offset relative to that of the test signal.

The magnitude of the frequency offset for the Brillouin scattering component will depend on measurement details, such as the frequency of the test signal and the material of the optical fibre. Typically, the frequency shift observed for Brillouin scattering is in the range of 8 GHz to 12 GHz, such that the Brillouin scattering component may have a frequency in the range of 8 GHz to 12 GHz, depending on temperature and strain of the fibre.

For example, the inventors have found that the Brillouin frequency shift is typically around 10-11 GHz for silica fibres at room temperature under zero strain. Temperature sensitivity of the Brillouin frequency shift is typically around 1 MHz/K, meaning that for a 200°C operating range, a change with temperature in the range of 0-200 MHz in the Brillouin frequency shift is expected. Strain sensitivity of the Brillouin frequency shift is typically around 0.05 MHz/μStrain. So, for a maximum 3 % breaking strain of the fibre, a maximum Brillouin frequency shift of around 1.5 GHz is expected with strain of the fibre.

In more detail, the Brillouin component may comprise a Stokes component, whose frequency is down-shifted relative to the test signal, and an Anti-Stokes component whose frequency is up-shifted relative to the test signal.

The first detector stage is further configured to interfere the local oscillator signal with received scattered signal, and produce an output signal based on an interference of the local oscillator signal and the scattered signal. The first detector stage may comprise an optical detector which is arranged to generate an output signal that is representative of an intensity of incident light on the detector. For example, the first detector stage may include a square law detector. A square law detector outputs a signal having an intensity that is proportional to the square of the field amplitude of incident light on the detector. Both the local oscillator signal and the scattered signal may be incident on the detector of the first detector stage, such that they interfere at the detector. As a result, the detector (e.g. square law detector) may produce an output signal that is related to an intensity produced by the interference of the local oscillator signal and the scattered signal.

As the local oscillator signal and the scattered signal each respectively comprise two frequency components, the output signal will include a series of different frequency components resulting from the interference between the two signals. Specifically, the output signal includes a first component which is at a first frequency (equal to the frequency difference between the first local oscillator component and the Rayleigh scattering component), and a second component which is at a second frequency (equal to the frequency difference between the second local oscillator component and the Brillouin scattering component). The first component of the output signal relates to Rayleigh scattering, and corresponds to a DAS signal, whilst the second component of the output signal relates to Brillouin scattering, and corresponds to a DSTS signal. The DAS signal and the DSTS signal can then be processed separately, using known techniques. For example, the DAS signal can be processed to estimate a strain and/or temperature differential at a location in the optical path, whilst the DSTS signal can be processed to estimate an absolute value of strain and/or temperature at the location in the optical path.

The frequency shift of the second local oscillator component acts to bring the frequency of the DSTS signal (i.e. the second component of the output signal) closer to the frequency of the DAS signal (i.e. the first component of the output signal). This may facilitate detecting both Rayleigh and Brillouin scattering at the first detector stage. In particular, if the frequency shift of the second local oscillator component is set to be close to the frequency shift cause by Brillouin scattering, then this may result in the second frequency being close to the first frequency. In practice, the frequency shift of the second local oscillator component may be set based on the measurement conditions (e.g. fibre material, temperature of the fibre), to ensure that the second local oscillator component is close in frequency to the Brillouin scattering. For example, the Brillouin scattering frequency along an optical fibre may be measured, and/or a look-up table may be used, to enable the frequency shift of the second local oscillator component to be set accordingly. In some cases, the frequency shift of the second local oscillator may be changed over time, e.g. if a given location or area of the fibre were at a significantly different temperature to the rest of the fibre.

The first detector stage may comprise an acquisition system configured to acquire the output signal, e.g. so that the output signal can be stored and analysed. For example, the first detector stage may comprise an analog-to-digital converter configured to receive the output signal from the optical detector (e.g. square law detector). The analog-to-digital converter may be configured to convert the output signal into a digital signal, which can subsequently be stored and processed by a computing system.

The local oscillator stage may comprise a single sideband modulator which is configured to receive the light signal from the light source and generate the second local oscillator component. Passing the light signal through a single sideband modulator may enable a frequency-shifted copy of the light signal to be created.

The single sideband modulator may further be configured to not fully suppress the light signal received from the light source, such that the first local oscillator component corresponds to a non-fully suppressed version of the light signal from the light source. In other words, the single sideband modulator may create a frequency-shifted copy of the light signal (i.e. the second local oscillator component), whilst not fully suppressing the original light signal received from the light source (i.e. to provide the local oscillator component). Thus, the single sideband modulator may output both the first component and the second component of the local oscillator signal, which may simplify a configuration of the local oscillator stage. This may be achieved by non-perfectly biasing a single sideband suppressed carrier (SSC-SC) modulator, so that it does not fully suppress a carrier signal (i.e. the light signal) which is fed to it. In this manner, it is possible to shift the relative power in the shifted and non-shifted components of the local oscillator signal.

Other techniques may also be used for generating the two local oscillator components based on the received light signal. For example, as mentioned above, the local oscillator stage may create two copies of the light signal, and apply a frequency shift to one of the two copies.

The first detector stage may have a detection bandwidth that is configured to cover the first frequency, and the frequency shift of the second component of the local oscillator signal may be set such that the second frequency is within the detection bandwidth. In this manner, it is possible to ensure that both the first frequency and the second frequency are within the detection bandwidth of the detector stage, such that the DAS signal and the DSTS signal can reliably be extracted from the detector stage's output signal. In particular, the second local oscillator signal acts to shift the DSTS signal closer in frequency to the DAS signal, such that both the DAS signal and the DSTS signal can be represented within the same detection bandwidth. Further, as mentioned above, the inventors have realised that Rayleigh scattering and Brillouin scattering have bandwidths of a similar order, such that by shifting the DSTS signal towards the DAS signal, both signals can be represented within the same detection bandwidth.

The frequency shift of the second local oscillator component may be selected such that a frequency of the second local oscillator component is within a predetermined range of a frequency of the Brillouin scattering component (i.e. so that the second frequency is in the predetermined range). This may help ensure that the second frequency is within the detection bandwidth. For example, the frequency shift of the second local oscillator signal may be set such that the second frequency is 2 GHz or less (e.g. 2 GHz, 1.5 GHz, 1 GHz or 0.5 GHz). This may enable detection of the first and second components of the output signal using a detector having a detection bandwidth of 2 GHz or less.

As noted above, the frequency shift caused by Brillouin scattering is dependent on measurement conditions, such as the material and temperature of the optical path. Therefore, the frequency shift of the second local oscillator component may be set based on the measurement conditions, e.g. based on an observed frequency of the Brillouin scattering component.

Likewise, the detection bandwidth may be selected based on measurement conditions, such as the material of the optical path and the temperature of the optical path, as these will affect the offset of the Brillouin scattering which in turn determines the bandwidth requirements for detection. The measurement conditions may also affect the linewidths and amplitudes of the Rayleigh and Brillouin scattering.

The detection bandwidth may be between 100 MHz and 2 GHz, as the bandwidths for Rayleigh scattering and Brillouin scattering are typically observable in this range.

The second local oscillator component may be frequency-shifted relative to the light source by a frequency in the range of 8 GHz to 12 GHz. In typical measurement conditions (e.g. where the optical path includes a silica fibre), the frequency shift caused by Brillouin scattering is in the range of 8 GHz to 12 GHz, as discussed above. Thus, setting the frequency shift for the second local oscillator component in this range may bring the frequency of the second local oscillator component close to the frequency of the Brillouin scattering component. As a results, the second frequency will be less than the frequency of the Brillouin scattering component, and will be closer to the first frequency, thus facilitating detection of both DAS and DSTS signals. As an example, where the frequency shift from Brillouin scattering is 11 GHz, the frequency shift of the second local oscillator component may be 10 GHz. Then, the second frequency will be 1 GHz, meaning that the DSTS signal will be observed at 1 GHz.

The launch stage may be configured to frequency-shift the test signal relative to the light source. In this manner, the DAS measurement may be an optical heterodyne measurement. The frequency shift may be applied by the pulse generator mentioned above, i.e. the pulse generator may generate the pulsed test signal as well as frequency-shift the test signal. Then, the first frequency may correspond to the frequency shift applied to the test signal, i.e. the DAS signal may be at a frequency corresponding to the frequency shift applied to the test signal.

The frequency shift of the test signal relative to the light source may be in the range of 50 MHz to 500 MHz. In a preferred example, the frequency shift may be in the range of 100 MHz to 200 MHz.

Alternatively, no frequency shift may be applied to the test signal, i.e. the DAS measurement may be an optical homodyne measurement. In such a case, the test signal and the first component of the local oscillator signal are at a same frequency. Where a homodyne DAS measurement is performed, the first detector stage may include an optical hybrid detection system, e.g. which is configured to mix the scattered signal with the local oscillator signal and a phase-shifted (e.g. 90 degree phase-shifted) copy of the local oscillator signal.

In some embodiments, the system may be configured to alternate over time between a first step for detecting the first scattering component and a second step for detecting the second scattering component; and the launch stage may be configured to generate a first test signal in the first step and a second test signal in the second step, the first test signal and the second test signal having a different property. In this manner, different test signals may be used for probing Rayleigh scattering and Brillouin scattering. Thus, rather than using the same test signal for probing both Rayleigh and Brillouin scattering, the first test signal and the second test signal can be specifically tailored for the detection of Rayleigh scattering and Brillouin scattering, respectively. This may improve an accuracy with which Rayleigh and Brillouin scattering can be measured, e.g. by enabling improvements in signal-to-noise ratio (SNR) for the first and second components of the output signal. Furthermore, as the DAS signal and DSTS signal are obtained from different test signals, it is possible to perform a calibration process for the DSTS signal (examples of which are discussed below), without interrupting the DAS measurement.

The first test signal and the second test signal may have one or more properties which are different. For example, the first test signal and the second test signal may have a different pulse power, a different pulse duration, a different amplitude, and/or a different frequency shift. For example, the pulse powers of the first test signal and the second test signal may be adjusted in order to obtain a desired SNR for the DAS and DSTS measurements. The properties of the first and second test signals may be adjusted and optimised during a setup phase, in order to provide a desired SNR for the DAS and DSTS measurements.

The first component of the output signal may be measured when the system is in the first step, whilst the second component of the output signal may be measured when the system is in the second step. In other words, the first component of the output signal may be obtained as a result of the first test signal, whilst the second component of the output signal may be obtained as a result of the second test signal. Thus, the DAS signal and the DSTS signal may be obtained using different pulsed test signals.

The launch stage may be configured to alternate between generating a pulse of the first test signal and a pulse of the second test signal, such that subsequent pulses of the test signal probe different scattering mechanisms. For example, the pulse generator in the launch stage may be configured to sequentially generate a pulse of the first test signal and a pulse of the second test signal.

The system may be configured to control the launch stage to vary a frequency shift applied to the second test signal upon successive iterations of the second step. Varying the frequency shift applied to the second test signal and the local oscillator signal may be equivalent to varying a frequency of the light source for the purposes of measurements on the optical path. Advantageously however, by controlling the launch stage and/or the local oscillator stage, the frequency of the light source can be kept constant. Whereas sweeping the frequency of the light source may take place on a timescale of minutes (as this usually involves varying a temperature of the light source), the frequency shift applied to the second test signal can be varied near-instantly. In particular, by controlling the pulse generator in the launch stage and/or the modulator in the local oscillator stage, signal frequency may be directly changed within a single pulse repetition.

Whilst the frequency shift applied to the second test signal is being varied upon successive iterations of the second step, the frequency of the first test signal and of the components of the local oscillator signal may be kept constant across successive iterations of the first step. In this manner, the DAS measurement performed during the first step may be unaffected by frequency changes taking place for the DSTS measurement.

Furthermore, the system may be configured to control the local oscillator stage to apply the same frequency shift to the first local oscillator component as for the second test signal. In this manner a frequency difference between the second test signal and the first local oscillator component may be kept constant, whilst the frequency of the second test signal is varied across successive iterations of the second step. As a result, the frequency of the first component of the output signal may be kept constant across successive iterations of the second step, thus facilitating obtaining the DAS and signal in the second step. In some cases, the same frequency shift may also be applied to the second local oscillator component, to keep constant the frequency of the second component of the output signal, which may facilitate obtaining the DSTS signal.

Varying the frequency of the second test signal upon successive iterations of the second step may serve to determine a loss profile of the optical path, which may be used for normalising the DSTS signal. In particular, varying the frequency shift applied to the second test signal may yield DAS signals that effectively correspond to different light source frequencies. In other words, the Rayleigh component of the scattering signal obtained across successive iterations of the second step may be equivalent to signals obtained for different light source frequencies. This enables a wideband ensemble average of the Rayleigh component (or DAS signals) obtained across successive iterations of the second step to be averaged, in order to determine a loss profile of the optical path.

Thus, in some cases, the system may be configured to perform a sweep (e.g. across a predetermined range) of the frequency shift applied to the second test signal over successive iterations of the second step. The system may then determine an average of the Rayleigh component of the scattering signal across a range of effective light source wavelengths, based on which a loss profile of the optical path can be determined.

Typical modulators which may be used in the launch stage and the local oscillator stage may have bandwidths of the order of 10 to 20 GHz, thus enabling the frequency shift applied to the second test signal to be swept over a range of 10 to 20 GHz across multiple iterations of the second step. In this manner, a wideband average of the Rayleigh component (and/or of the DAS signal) can be obtained. The inventors have found that using a wideband average of the Rayleigh component (and/or of the DAS signal) for normalising the DSTS signal may minimise coherent Rayleigh noise (CRN) which results from the coherent nature of the light source.

In some cases, the system may be configured to vary a frequency difference between the second test signal and the second local oscillator component upon successive iterations of the second step. This may be achieved, for example, by varying the frequency shift applied to the second local oscillator component in the local oscillator stage upon successive iterations of the second step. Additionally or alternatively, this could be achieved by varying a frequency shift applied to the second test signal upon successive iterations of the second step. Varying the frequency difference between the second test signal and the second local oscillator component may enable various parameters of the Brillouin scattering to be determined. In particular, if the frequency difference between the second test signal and the second local oscillator component is varied upon successive iterations of the second step (e.g. upon successive pulses of the second test signal) by an amount which is less than a linewidth of the Brillouin scattering component, it is possible to map a width, line-shape and peak of the Brillouin scattering component.

Alternatively to the above discussion, instead of measuring Rayleigh scattering and Brillouin scattering on alternate pulses of the test signal, Rayleigh scattering and Brillouin scattering can be detected simultaneously, i.e. using the same pulsed test signal. In such a case, properties of the test signal may be set to enable detection of both scattering mechanisms. In such a case, the test signal may not be specifically tailored for one type of scattering mechanism, and may represent a compromise for detecting both types of scattering mechanism. However, obtaining both the DAS signal and the DSTS signal based on the same test signal may increase an acquisition speed for the DAS and DSTS signals, which may result in an increased SNR and bandwidth of the DAS and DSTS signals.

The launch stage may comprise a regenerative loop configured to provide a portion of the pulsed test signal as positive feedback for the launch stage. This may increase a bandwidth across which the frequency of the test signal can be shifted. For example, in the case discussed above where the frequency difference between the second test signal and the local oscillator signal is varied, use of a regenerative loop in the launch stage may increase a range across which the frequency difference can be varied.

The regenerative loop may be connected between an output and an input of the pulse generator in the launch stage, such that a portion of the test signal output from the pulse generator is provided to the input of the pulse generator. In this manner, a pulse of a desired amplitude may be built up using the regenerative loop.

The first detector stage may be a polarisation diverse detector stage. For example, the local oscillator signal or the scattered signal may be split into components having different polarisations, e.g. vertical and horizontal polarisation. The first detector stage may then include a respective detector for each polarisation state, such that a respective output signal may be generated for each polarisation state. This may serve to ensure that interference of the scattered signal and local oscillator signal can be detected for at least one of the polarisation states, e.g. in cases where polarisation of the scattered signal varies relative to polarisation of the local oscillator signal.

The optical measurement system of the first aspect may further be adapted to perform DTS measurements, in addition to the DAS and DSTS measurements discussed above. Thus, the scattered signal may further comprise a Raman scattering component, and the system further may further comprise: a second detector stage; and a wavelength splitter configured to split the scattered signal such that the first scattering component and the second scattering component are transmitted to the first detector stage, and such that the Raman scattering component is transmitted to the second detector stage; wherein the second detector stage is configured to split the Raman scattering component into a Stokes component and an Anti-Stokes component, and to detect an amplitude of each of the Stokes component and the Anti-Stokes component.

In addition to the Rayleigh and Brillouin scattering components discussed above, the scattering signal may also include a Raman scattering component, which results from Raman scattering of the test signal in the optical path. The Raman scattering component may typically be at a much higher frequency than the Brillouin scattering component. Indeed, the frequency shift caused by Raman scattering in an optical fibre (e.g. a silica fibre) is usually between 10 to 15 THz.

The wavelength splitter acts to separate the Rayleigh and Brillouin components from the Raman component of the scattering signal, on the basis of the differences in frequency (and therefore in wavelength) between the different components. For instance, the wavelength splitter may be configured to transmit components of the scattered signal having a frequency below a predetermined threshold to the first detector stage, and to transmit components of the scattered signal having a frequency above the predetermined threshold to the second detector stage. In one example, the wavelength splitter may be configured to transmit components of the scattered signal having a frequency below 20 GHz to the first detector stage (such that both the Rayleigh and Brillouin components reach the first detector stage), and to transmit components of the scattered signal having a frequency above 10 THz to the second detector stage (such that the Raman scattering component reaches the second detector stage).

The wavelength splitter may include any suitable optical components for separating components of a light signal on the basis of their frequency. In one example, the wavelength splitter may comprise a wavelength division demultiplexer.

The wavelength splitter may comprise an input which is connectable (or connected) to the optical path, to receive the scattered signal from the optical path. The wavelength splitter may further comprise a first output which is connected to the first detector stage, and a second output which is connected to the second detector stage, the wavelength splitter being configured to output the Rayleigh and Brillouin scattering components via its first output, and to output the Raman scattering component via its second output.

The second detector stage is configured to perform a DTS measurement. The inventors have realised that, unlike Brillouin and Rayleigh scattering, Raman scattering results in a broadband emission, such that using separate detector stages for the DTS measurement compared to the DAS and DSTS measurements is beneficial, and may improve a quality of measurement results. In particular, the first and second detector stages can be tailored to the specific scattering mechanisms of interest.

The second detector stage is configured to split the Raman scattering component into the Stokes component (which is down-shifted relative to the test signal) and the Anti-Stokes component (which is up-shifted relative to the test signal). This may be achieved using a second wavelength splitter, which is configured to split the Raman scattering component into the Stokes and Anti-Stokes components based on the different frequencies (or wavelengths) of the Stokes and Anti-Stokes components. The second wavelength splitter may include any suitable optical components for separating components of a light signal on the basis of their frequency. In one example, the second wavelength splitter may comprise a wavelength division demultiplexer.

The second wavelength splitter may have an input that is connected to the second output of the first wavelength splitter mentioned above, to receive the Raman scattering component. The second wavelength splitter may further have a first output configured to output the Stokes component, and a second output configured to output the Anti-Stokes component.

The second detector stage may further comprise a first detector configured to detect an amplitude of the Stokes component, and a second detector configured to detect an amplitude of the Anti-Stokes component. In this manner, a ratio of the Anti-Stokes and Stokes components may be determined, in order to determine a temperature of the optical path.

The first detector and the second detector may include any suitable type of detector. Preferably, the first and second detectors may comprise high gain detectors. For example, the first and second detectors may comprise avalanche photodiode (APD) detectors, or photomultiplier detectors.

In some cases, the second detector stage may comprise a first bandpass filter connected to an input of the first detector, and a second bandpass filter connected to an input of the second detector. In this manner, the Stokes and Anti-Stokes components may be passed through respective bandpass filters before reaching the first and second detectors, respectively. This may serve to isolate the Stokes and Anti-Stokes components, in order to improve an accuracy of the DTS measurement.

In an alternative implementation of the invention, instead of using a local oscillator signal which has two components, one of which is frequency-shifted, the test signal may include a first component and a second component which is frequency shifted relative to the first. In other words, instead of providing the frequency-shifted component in the local oscillator, the frequency-shifted component may be provided in the test signal. This may yield an equivalent result to the first aspect of the invention, with the frequency-shifted component of the test signal serving to shift the DSTS signal closer in frequency to the DAS signal.

Thus, according to a second aspect of the invention, there is provided an optical measurement system comprising: a coherent light source configured to generate a light signal; a launch stage configured to receive the light signal from the light source and generate a pulsed test signal and launch the test signal along an optical path, wherein the test signal comprises a first test signal component and a second test signal component which is frequency-shifted relative to the first test signal component; a local oscillator stage configured to generate a local oscillator signal; and a first detector stage configured to: receive the local oscillator signal from the local oscillator stage and a scattered signal from the optical path, wherein the scattered signal comprises a Rayleigh scattering component resulting from scattering of the first test signal component and a Brillouin scattering component resulting from scattering of the second test signal component; and interfere the local oscillator signal with the scattered signal to produce an output signal having a first component at a first frequency corresponding to a frequency difference between the local oscillator signal and the Rayleigh scattering component, and a second component at a second frequency corresponding to a frequency difference between the local oscillator signal and the Brillouin scattering component.

The second aspect of the invention corresponds to an alternative (or equivalent) implementation of the system of the first aspect of the invention, and may yield equivalent results. In particular, the first component and the second component of the output signal may correspond to a DAS signal and DSTS signal, respectively, and may be at the same frequencies as the first and second components of the output signal in the first aspect. Accordingly, any features discussed above in relation to the first aspect of the invention may be shared with the second aspect of the invention. In particular, equivalents of features relating to the frequency shift of the second local oscillator component in first aspect of the invention may be applied to the frequency shift of the second test signal component.

The second test signal component may be frequency-shifted based on similar considerations and in a manner analogous to the second local oscillator component in the first aspect. In particular, the frequency shift applied of the second test signal component serves to bring the frequency of the DSTS signal closer to that of the DAS signal.

The first test signal component may not be frequency-shifted relative to the light source (e.g. there is a 0 Hz shift between the first test signal component and the light source), whilst the second test signal is frequency-shifted relative to the light source.

The local oscillator signal may be frequency-shifted relative to the light source, e.g. to enable heterodyne DAS detection in a manner analogous to that discussed in relation to the first aspect of the invention. For example, the frequency shift of the local oscillator signal relative to the light source may be in the range of 50 MHz to 500 MHz. In a preferred example, the frequency shift may be in the range of 100 MHz to 200 MHz.

Alternatively, no frequency shift may be applied to the local oscillator signal, i.e. the DAS measurement may be an optical homodyne measurement.

In a further alternative, the first test signal component may be frequency-shifted relative to the light source (e.g. by an amount between 100 MHz-200 MHz), and no frequency shift may be applied to the local oscillator signal, to allow for heterodyne DAS detection.

The Rayleigh scattering component of the scattered signal results from scattering of the first test signal component along the optical path, whilst the Brillouin scattering component results from scattering of the second test signal component along the optical path. For example, the Stokes component of the Brillouin scattering component may be used, as this will be down-shifted in frequency relative to the second test signal component, so that it may be closer in frequency to the Rayleigh scattering component. Thus, in a manner analogous to that discussed for the first aspect of the invention, the first and second components of the output signal may be observable within the detection bandwidth of the detector stage.

The first test signal component may be in the form of a first pulse, and the second test signal component may be in the form of a second pulse. Thus, the test signal may comprise a pair of pulses which are at different frequencies.

In view of the first aspect and the second aspect of the invention disclosed above, the local oscillator signal and/or the test signal may be generated so as to have first and second components which are shifted in energy relative to one another.

Thus, in a general aspect of the invention, the test signal and/or the local oscillator signal may comprise a first component and a second component which is frequency-shifted relative to the first component.

A third aspect of the invention provides an optical measurement system that enables combination of DTS measurements with DAS or DSTS measurements. According to the third aspect of the invention, there is provided an optical measurement system comprising: a coherent light source configured to generate a light signal; a launch stage configured to receive the light signal from the light source and generate a pulsed test signal and launch the test signal along an optical path; a local oscillator stage configured to generate a local oscillator signal; a first detector stage and a second detector stage; and a wavelength splitter configured to receive a scattered signal from the optical path, and split the scattered signal into a first scattering component which is transmitted to the first detector stage and a Raman scattering component which is transmitted to the second detector stage; wherein the first detector stage is configured to interfere the local oscillator signal with the scattered signal to produce an output signal having a frequency corresponding to a frequency difference between the local oscillator signal and the first scattering component; wherein the second detector stage is configured to split the Raman scattering component into a Stokes component and an Anti-Stokes component, and to detect an amplitude of each of the Stokes component and the Anti-Stokes component.

The optical measurement system of the third aspect of the invention is based on similar considerations as the first aspect of the invention, in particular embodiments of the first aspect which include DTS measurements. Any features discussed above in relation to the first aspect of the invention may be shared with the third aspect of the invention. For instance, the light source, launch stage, local oscillator stage, first detector stage, second detector stage, and wavelength splitter may be configured as discussed above in relation to the first aspect of the invention.

The first scattering component may be a Rayleigh scattering component or a Brillouin scattering component. Thus, depending on whether the Rayleigh scattering component or the Brillouin scattering component is used, the first detector stage may yield a DAS signal or a DSTS signal, in line with the discussion above relating to the first aspect.

According to a fourth aspect of the invention, there is provided a method for operating an optical measurement system, the method comprising: generating, using a coherent light source, a light signal, and conveying the light signal to a launch stage; generating, at the launch stage, a pulsed test signal and launching the test signal along an optical path; generating, at a local oscillator stage, a local oscillator signal, wherein local oscillator signal comprises a first local oscillator component and a second local oscillator component which is frequency-shifted relative to the first local oscillator component; receiving, at a first detector stage, the local oscillator signal from the local oscillator stage and a scattered signal from the optical path, wherein the scattered signal comprises a Rayleigh scattering component and a Brillouin scattering component; interfering, by the first detector stage, the local oscillator signal with the scattered signal to produce an output signal having a first component at a first frequency corresponding to a frequency difference between the first local oscillator component and the Rayleigh scattering component, and a second component at a second frequency corresponding to a frequency difference between the second local oscillator component and the Brillouin scattering component.

The method of the fourth aspect of the invention may be used to operate the system of the first aspect of the invention. Therefore, any features discussed above in relation to the first aspect of the invention may be shared with the fourth aspect of the invention.

The light source may be configured to convey the light signal to both the launch stage and the local oscillator stage (e.g. via a beam splitter), such that the local oscillator stage may use the light signal for generating the local oscillator signal. Alternatively, a separate light source may be employed by the local oscillator stage for generating the local oscillator signal.

The first detector stage may have a detection bandwidth that covers the first frequency, and the method may further comprise: setting the frequency shift of the second component of the local oscillator signal relative to the light source such that the second frequency is within the detection bandwidth.

The method may further comprise: alternating over time between a first step in which the launch stage generates a first test signal and a second step in which the launch stage generates a second test signal, the first test signal and the second test signal having a different property.

The method may further comprise varying a frequency shift applied to the second test signal upon successive iterations of the second step.

The method may further comprise determining a loss profile of the optical path based on an average of the Rayleigh scattering components obtained across multiple iterations of the second step. The loss profile of the optical path may relate an optical loss to a position (i.e. a scattering location) along the optical path.

For a location along the optical path, the average may, for example, correspond to an average over time of the Rayleigh scattering component at that location across multiple iterations of the second step (i.e. as the frequency shift applied to the second test signal is varied). The optical loss at that location on the optical path may be determined by comparing (e.g. dividing) the average of the Rayleigh scattering component for that location with a value of the Rayleigh scattering component obtained for a location at a proximal end of the optical path (i.e. at an end of the optical path closest to the launch stage). This process may be performed for multiple locations along the optical path, to build up the loss profile of the optical path. As noted above, averaging the Rayleigh scattering component over multiple iterations of the second step may serve to minimise CRN.

The method may further comprise using the loss profile to normalise the second term of the output signal. In other words, the loss profile may serve to normalise the DSTS signal, i.e. to take into account optical losses along the optical path.

The scattered signal may further comprise a Raman scattering component, and the method may further comprise: splitting, with a wavelength splitter, the scattered signal such that the first scattering component and the second scattering component are transmitted to the first detector stage, and such that the Raman scattering component is transmitted to a second detector stage; splitting, at the second detector stage, the Raman scattering component into a Stokes component and an Anti-Stokes component, and detecting an amplitude of each of the Stokes component and the Anti-Stokes component.

According to a fifth aspect of the invention, there is provided a method for operating an optical measurement system, the method comprising: generating, using a coherent light source, a light signal, and conveying the light signal to a launch stage; generating, at the launch stage, a pulsed test signal and launching the test signal along an optical path, wherein the test signal comprises a first test signal component and a second test signal component which is frequency-shifted relative to first test signal component; generating, at a local oscillator stage, a local oscillator signal; receiving, at a first detector stage, the local oscillator signal from the local oscillator stage and a scattered signal from the optical path, wherein the scattered signal comprises a Rayleigh scattering component resulting from scattering of the first test signal component and a Brillouin scattering component resulting from scattering of the second test signal component; and interfering, by the first detector stage, the local oscillator signal with the scattered signal to produce an output signal having a first component at a first frequency corresponding to a frequency difference between the local oscillator signal and the Rayleigh scattering component, and a second component at a second frequency corresponding to a frequency difference between the local oscillator signal and the Brillouin scattering component.

The method of the fifth aspect of the invention may be used to operate the system of the second aspect of the invention. Therefore, any features discussed above in relation to the first and second aspects of the invention may be shared with the fifth aspect of the invention.

In view of the fourth and fifth aspects of the invention, in a further general aspect of the invention, the test signal and/or the local oscillator signal may comprise a first component and a second component which is frequency-shifted relative to the first component.

According to a sixth aspect of the invention, there is provided a method for operating an optical measurement system, the method comprising: generating, using a coherent light source, a light signal, and conveying the light signal to a launch stage; generating, at the launch stage, a pulsed test signal and launching the test signal along an optical path; generating, at the local oscillator stage, a local oscillator signal; receiving, at a wavelength splitter, a scattered signal from the optical path, and splitting the scattered signal into a first scattering component which is transmitted to a first detector stage and a Raman scattering component which is transmitted to a second detector stage; interfering, at the first detector stage, the local oscillator signal with the scattered signal to produce an output signal having a frequency corresponding to a frequency difference between the local oscillator signal and the first scattering component; and splitting, at the second detector stage, the Raman scattering component into a Stokes component and an Anti-Stokes component, and detecting an amplitude of each of the Stokes component and the Anti-Stokes component.

The method of the sixth aspect of the invention may be used to operate the system of the third aspect of the invention. Therefore, any features discussed above in relation to the first and third aspects of the invention may be shared with the sixth aspect of the invention.

The first scattering component may be a Rayleigh scattering component or a Brillouin scattering component.

BRIEF DESCRIPTION OF THE DRAWINGS

An embodiment of the invention is discussed below in more detail with reference to the accompanying drawings, in which:

Fig. 1 is a schematic diagram of an optical measurement system according to an embodiment of the invention;
Fig. 2a is a spectrum of a scattered signal obtained from an optical fibre;
Fig. 2b is a spectrum of a local oscillator signal generated by the system of Fig. 1;
Fig. 3 is a schematic diagram of an optical measurement system according to an embodiment of the invention;
Fig. 4 is a schematic diagram of an optical measurement system according to an embodiment of the invention;
Fig. 5a is a spectrum of a scattered signal provided to a first detector stage of the system of Fig. 4;
Fig. 5b is a spectrum of a scattered signal provided to a second detector stage of the system of Fig. 4;
Fig. 6 is a schematic diagram of an optical measurement system according to an embodiment of the invention;
Fig. 7a is a diagram illustrating an example test signal that may be used in an embodiment of the invention;
Fig. 7b is a spectrum of a scattered signal obtained from an optical fibre in an embodiment of the invention; and
Fig. 7c is a spectrum of interference components obtained at an optical detector in an embodiment of the invention.

DETAILED DESCRIPTION; FURTHER OPTIONS AND PREFERENCES

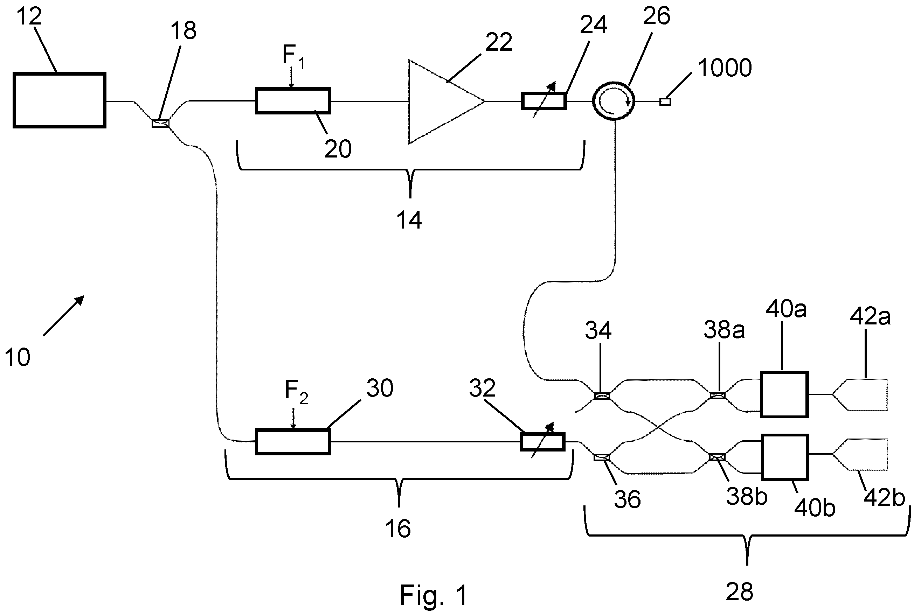

Fig. 1 shows a schematic diagram of an optical measurement system 10 according to an embodiment of the invention. The optical measurement system 10 is configured to enable simultaneous DAS and DSTS measurements on a single optical path. The optical measurement system 10 is in the form of a local oscillator based optical time domain reflectometer (OTDR) system. The system 10 is arranged to interrogate an optical path, which may comprise an optical fibre 1000. The optical fibre 1000 may be of any desirable length for a given purpose.

The system 10 comprises a coherent light source 12 which produces a coherent light signal. The light source 12 may be a laser, which is used in continuous wave (CW) operation. The light source 12 is coupled to a launch stage 14 and a local oscillator stage 16, by an optical coupler 18 or beam splitter. In this manner, a first portion of light emitted by the light source is transmitted to the launch stage 14, and a second portion of the light emitted by the light source is transmitted to the local oscillator stage 16. The light may be split between the two stages by the optical coupler 18 such that 90% of the incoming light is directed into the launch path, and 10% of the incoming light is directed into the local oscillator path. Of course, the ratio of incoming light directed into each stage may be chosen by the operator or manufacturer depending on the nature of the operation for which the system 10 is used. Optionally, an optical isolator (not shown) may be coupled between the light source 12 and the optical coupler 18, to ensure that light is not passed back to the light source 12.

The launch stage 14 includes a pulse generator 20, into which the light signal received at the launch stage 14 from the light source 12 is directed. The pulse generator 20 is a device which is configured to generate a pulsed test signal from the received light signal. In addition, a drive signal can be applied to the pulse generator 20 to upshift or downshift the frequency of test signal by an amount equal to the frequency of the drive signal. This is shown in Fig. 1 by the $F_1$ frequency being introduced to the pulse generator. This frequency, $F_1$, may be known as the intermediate frequency or the difference frequency. The frequency shift applied to the test signal may be of the order of 100 MHz to 200 MHz. The pulse generator may be configured to generate a pulsed test signal which is between 5 ns and 100 ns in duration, but not limited to this range. The pulse generator 20 may be an IQ modulator which is implemented, for example, by an acousto-optic modulator (AOM) or an electro-optic modulator (EOM). In some cases, the pulse generator 20 may comprise a cascaded EOM, or other suitable arrangement of acousto-optic modulators (AOM), or electro-absorptive modulators (EAM). Of course, any preferred method of generating a pulse of light may be used. The pulsed test signal may also be referred to as a launch pulse.

The launch stage 14 further includes an optical amplifier 22 that is configured to amplify the pulsed test signal. The amplifier 22 may be in a master oscillator power amplifier (MOPA) configuration. The amplified test pulse may then be passed through an attenuator 24 for controlling a power of the test signal. The launch stage 14 is connected to the optical fibre 1000 via an optical circulator 26, which has three ports. The pulsed test signal enters the circulator 26 through a first port, where it is passed to a second port in order to enter the optical fibre 1000. As the test signal passes through the fibre 1000, a fraction of the light is backscattered from the fibre 1000 by a variety of scattering mechanisms, including Rayleigh scattering, Brillouin scattering and Raman scattering. A portion of the backscattered light is captured and guided back along the optical fibre 1000 towards the circulator 26. The scattered light, which may be referred to herein as a scattered signal, enters the circulator 26 at the second port, and leaves the circulator 26 to enter a detection stage 28 via a third port.

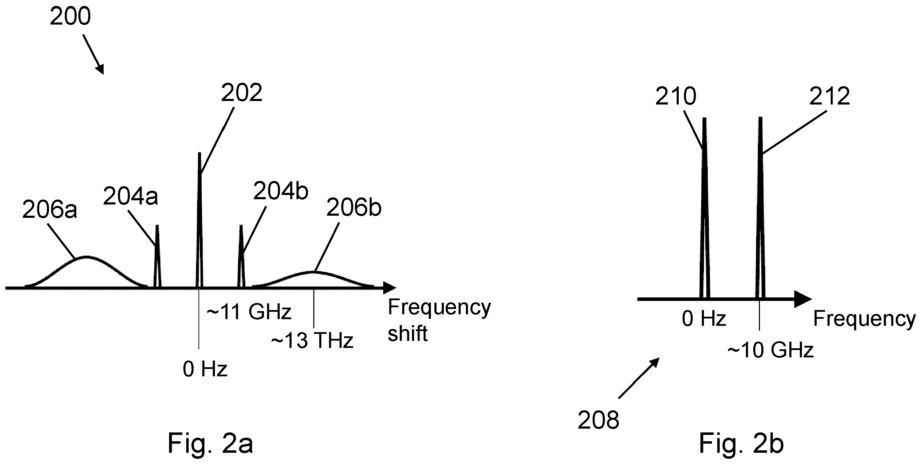

Fig. 2a shows an example spectrum 200 of a scattered signal received from the optical fibre 1000. The horizontal axis in Fig. 2a represents a frequency shift relative to the pulsed test signal. As can be seen, the scattered signal includes a Rayleigh scattering component 202 at a shift of 0 Hz (i.e. the frequency of the Rayleigh scattering component 202 is $F_1$), which results from elastic scattering of the test signal. The scattered signal further includes a Brillouin scattering component 204 which is frequency-shifted relative to the test signal, and which results from inelastic Brillouin scattering of the test signal. The frequency shift associated with Brillouin scattering is typically between 8 GHz and 12 GHz. In the example shown, the Brillouin frequency shift is around 11 GHz. In more detail, the Brillouin scattering component includes a Stokes component 204a whose frequency is down-shifted relative to the test signal, and an Anti-Stokes component 204b whose frequency is up-shifted relative to the test signal. The scattered signal also includes a Raman scattering component 206 which is frequency-shifted relative to the test signal, and which results from inelastic Raman scattering of the test signal. The frequency shift associated with Raman scattering is typically between 10 and 15 THz. In the example shown, the Raman frequency shift is around 13 THz. In more detail, the Raman scattering component includes a Stokes component 206a whose frequency is down-shifted relative to the test signal, and an Anti-Stokes component 206b whose frequency is up-shifted relative to the test signal. Herein, when reference is made to the Brillouin scattering component, this may refer to the Stokes and/or Anti-Stokes component of the Brillouin scattering component. Likewise, when reference is made to the Raman scattering component, this may refer to the Stokes and/or Anti-Stokes component of the Raman component.

The local oscillator stage 16 includes a modulator 30 which is configured to receive the light signal from the light source 12 and generate a local oscillator signal having a first local oscillator component which is not frequency-shifted, and a second local oscillator component which is frequency-shifted relative to the light source 12. In the example shown, the modulator 30 is an IQ modulator which is driven as a partial single side band suppressed carrier modulator (SSB-SC), which is non-perfectly biased so as not to fully suppress the original light signal. Thus, the modulator 30 outputs a frequency-shifted copy of the light signal, as well as a copy of the original light signal which may be partially suppressed. The frequency shift applied to the second local oscillator component may be controlled by a drive signal that is applied to the modulator 30, and is illustrated as $F_2$ in Fig. 1. The modulator 30 may be implemented by an electo-absorptive modulator (EAM), an acousto-optic modulator (AOM), an electro-optic modulator (EOM) or any form of single sideband modulator (SSB). Typically, the frequency shift applied to the second local oscillator component may be between 8 GHz and 12 GHz. For example, the frequency shift may be around 10 GHz. The local oscillator stage 16 may further include an attenuator 32 for controlling a power of the local oscillator signal. Of course, other arrangements in the local oscillator stage 16 than the one shown in Fig. 1 may be used for generating the two components of the local oscillator signal.

Fig. 2b shows an example spectrum 208 of the local oscillator signal generated by the local oscillator stage 16. The horizontal axis in Fig. 2b represents a frequency shift relative to the frequency of the light signal provided by the light source 12. As can be seen, the local oscillator signal includes a first local oscillator component 210 which is at 0 Hz, i.e. which is not frequency-shifted. The local oscillator signal further includes a second local oscillator component 212 which is shifted upwards in frequency. In the example shown, the second local oscillator component 204 is shifted by about 10 GHz, however other frequency shifts in the ranges mentioned above can be selected. It should also be noted that, as the modulator 30 is a complex field modulator, a negative frequency shift can be applied to the second local oscillator component instead of a positive frequency shift.

The detector stage 28 has two inputs. The first input of the detector stage 28 is connected to the third output of the circulator 26, to receive the scattered signal from the optical fibre 1000. The second input of the detector stage is connected to the local oscillator stage 16, to receive the local oscillator signal. In a first part of the detector stage 28, the scattered signal is divided into two paths, for example using a polarising beam splitter (PBS) 34. The PBS 34 splits the scattered light into a horizontally polarised state and a vertically polarised state. The PBS 34 is used as the polarisation of the pulsed test signal and also of the scattered signal will evolve as a function of distance as they pass through the optical fibre 1000. The PBS 34 therefore enables polarisation diverse detection, to ensure that a signal can always be detected, regardless of a polarisation state of the scattered signal. The local oscillator (LO) signal, which is highly polarised, is split equally between two paths using a polarisation maintaining optical coupler 36. In other embodiments, the LO signal may be split into two polarisation states in preference to the scattered signal as described.

The detector stage 28 includes first and second optical couplers 38a, 38b, configured to mix the LO signal with a respective one of the horizontal and vertical states of the scattered signal. The detector stage further includes a first square law detector 40a and a second square law detector 40b, on which the light output from each optical coupler 28a, 38b is respectively interfered. The first and second square law detectors each provide a respective output signal, which is respectively taken and measured at an analog-to-digital converter 42a, 42b. Thus, a first output signal is produced for the vertical polarisation stage, and a second output signal is produced for the horizontal polarisation stage.

Due to the presence of the two components in the LO signal, and the multiple scattering components in the scattered signal, the output signal from each detector 42a, 42b will include a series of components at different frequencies, corresponding to frequency differences between components of the LO signal and the scattered signal. In particular, each output signal will include a first component at a first frequency corresponding to a frequency difference between the first local oscillator component and the Rayleigh scattering component, and a second component at a second frequency corresponding to a frequency difference between the second local oscillator component and the Brillouin scattering component. The first component of the output signal relates to Rayleigh scattering, and thus corresponds to a DAS signal. In the example shown in Figs. 2a and 2b, and where a frequency shift $F_1$ is applied to the test signal, the DAS signal will be at a frequency $F_1$, whilst the DSTS signal will be at around 1 GHz (i.e. the frequency difference between the 11 GHz Brillouin scattering component and the 10 GHz second local oscillator component).

The DAS signal can be processed in accordance with known techniques, in order to extract differential strain and/or temperature information about the optical fibre 1000. For example, the applicant's earlier application published as GB 2588177 A (the entirety of which is incorporated herein by reference) provides processing techniques that can be applied to a DAS signal. The second component of the output signal relates to Brillouin scattering, and thus corresponds to a DSTS signal. The DSTS signal can be processed in accordance with known techniques, in order to extract values of the strain and/or temperature in the optical fibre 1000. For example, strain and temperature measurements using Brillouin scattering are disclosed in "Distributed fibre sensing using microwave heterodyne detection of spontaneous Brillouin backscatter" by S. M. Maughan (PhD thesis, University of Southampton).

The system 10 described above makes use of a heterodyne sensing approach, wherein the frequency of the test signal is frequency-shifted relative to the light source 12 (and thus relative to the first component of the LO signal). Preferably, the difference in frequency difference between the test signal and the first component of the LO signal should be larger than the bandwidth required to represent Rayleigh scattering, without allowing crosstalk between the carrier and the DC terms which are also generated (see below), allowing the phase and amplitude information of the scattering to be recovered using a real carrier. Another method employs a complex carrier detection stage, replicating the polarisation diverse detection stage for two copies of the local oscillator shifted by 90 degrees relative to each other. This allows detection via a complex carrier, allowing either the positive sidelobe or the negative sidelobe of the resulting interference signal to be recovered independently. This allows homodyne operation whereby the first component of the local oscillator signal and test signal operate at the same optical frequency.

A treatment of the interference of the LO signal and the scattered signal for the system 10 shown in Fig. 1 is shown below. This involves interference from the following five waves:

$$E_{LOA} = \frac{1}{2}E_{LOA}(e^{i(\phi_{LOA}(t)-\omega_{LOA}t)} + e^{-i(\phi_{LOA}(t)-\omega_{LOA}t)}) \qquad (1)$$

$$E_{LOB} = \frac{1}{2}E_{LOB}(e^{i(\phi_{LOB}(t)-\omega_{LOB}t)} + e^{-i(\phi_{LOB}(t)-\omega_{LOB}t)}) \qquad (2)$$

$$E_R = \frac{1}{2}E_R(e^{i(\phi_R(t)-\omega_R t)} + e^{-i(\phi_R(t)-\omega_R t)}) \qquad (3)$$

$$E_{AS} = \frac{1}{2}E_{AS}(T,\epsilon)(e^{i(\phi_{AS}(t)-\omega_{AS}(T,\epsilon)t)} + e^{-i(\phi_{AS}(t)-\omega_{AS}(T,\epsilon)t)}) \qquad (4)$$

$$E_S = \frac{1}{2}E_S(T,\epsilon)(e^{i(\phi_S(t)-\omega_S(T,\epsilon)t)} + e^{-i(\phi_S(t)-\omega_S(T,\epsilon)t)}) \qquad (5)$$

Equation (1) shows the E-field of the first local oscillator component (LOA), with phase $\emptyset_{LOA}$ and frequency $\omega_{LOA}$

(which corresponds to the frequency of the light source 12). Equation (2) shows the E-filed of the second local oscillator component (LOB), with phase $\varnothing_{LOB}$ and frequency $\omega_{LOB}$ (shifted relative to the light source 12). Equation (3) shows the E-filed of the Rayleigh scattering component, with phase $\varnothing_R$ and frequency $\omega_R$, which is offset from the light source frequency by $F_1$ (e.g. 100-200 MHz). Equation (4) shows the E-filed of the Anti-Stokes Brillouin scattering component, with phase $\varnothing_{AS}$ and frequency $\omega_{AS}$, which is shifted relative to the source frequency by the Stokes shift. Equation (5) shows the E-Field of the Stokes Brillouin scattering component, with phase $\varnothing_S$ and frequency $\omega_S$, which is shifted relative to the source frequency by the negative-Stokes shift. Each of equations (1)-(5) relates to the corresponding E-field at a given scattering location along the optical fibre. As can be seen in equations (4) and (5), the Anti-Stokes and Stokes Brillouin scattering components have an amplitude and frequency which depend on temperature T and strain $\varepsilon$ at the scattering location in the optical fibre.

When these waves interfere, and are observed by a square law detector, the resulting intensity measured at the detector corresponds to the sum of the E-fields multiplied by their complex conjugate, as shown by equation (6), below:

$$I_{Det} = <(E_S + E_{AS} + E_R + E_{LOA} + E_{LOB}).(E_S + E_{AS} + E_R + E_{LOA} + E_{LOB})^* > \qquad (6)$$

This results in several terms from each LO component beating with the Rayleigh, Stokes and Anti-Stokes scattering components, such that the interference intensity will include components at various sum and difference frequencies. In particular, the interference intensity includes (among others) the following three components:

1.

$$E_R E_{LOA}\{\cos(\phi_R(t) - \phi_{LOA}(t) - (\omega_R - \omega_{LOA})t)\}$$

2.

$$E_{AS}(T,\epsilon)E_{LOB}\{\cos(\phi_{AS}(t) - \phi_{LOB}(t) - (\omega_{AS} - \omega_{LOB})t)\}$$

3.

$$E_S(T,\epsilon)^2 + E_{AS}(T,\epsilon)^2 + E_R{}^2 + E_{LOA}{}^2 + E_{LOB}{}^2$$

The first component is an AC carrier corresponding to LOA mixing with the Rayleigh scattering component. The second component is an AC carrier corresponding to LOB mixing with the Anti-Stokes Brillouin scattering component. The third component corresponds to a DC component. Accordingly it can be seen that, amongst others, the interference at the detector stage generates a first component which is centred at the difference frequency between the first local oscillator component and the Rayleigh scattering component, and a second component which is centred at the difference frequency between the second local oscillator component and the Brillouin scattering component. The first component may be taken as the DAS signal, whilst the second component may be taken as the DSTS signal.

As an example, the Stokes shift maybe of the order of 10-11 GHz, the Rayleigh scattering component may be frequency shifted by 100-200 MHz relative to the LOA, and the frequency difference between LOA and LOB may be around 9-10 GHz. If the bandwidth of the detector stage is limited to 5 GHz then, of the many of the terms in $I_{Det}$ may average to zero over this bandwidth, however the three components noted above will be detectable within this bandwidth. Accordingly both the DAS signal and DSTS signal can be recovered using a single detector stage and acquisition system.

The system 10 of Fig. 1 can be used to perform simultaneous DAS and DSTS measurements, whereby the DAS and DSTS signals can be obtained based on a same test signal transmitted along the optical fibre 1000. In some cases, it may be desirable to normalise the DSTS signal, to take into account optical losses along the optical fibre 1000. This may be done, for example, by comparing an amplitude of the DSTS signal with an amplitude of the DAS signal. However, as a coherent light source 12 for the measurement, this adds coherent Rayleigh noise (CRN) into the Rayleigh scattering component. Therefore, in order to minimise CRN, an ensemble average of the DAS signal may be taken over a wide bandwidth of light source wavelengths. Such an ensemble average could be taken during a separate calibration phase of the system 10, which could be run periodically. During the calibration phase, the wavelength of the light source could be swept across a wide bandwidth (e.g. of the order of 10 GHz to 60 GHz) to obtain an ensemble average of the DAS signal over this bandwidth. This could be achieved, for example, by controlling a cavity temperature of the light source 12. Alternatively, a wideband light source may be used for the calibration phase. The calibration phase would build a trace that relates an optical loss of the optical fibre 1000 as a function of distance along the fibre. This trace could then be used to normalise the DSTS signal. It should be noted that, during the calibration phase, the DAS measurement may be interrupted, as the varying frequency of the light source 12 may result in unreliable DAS results.

A point worth noting is that the measured result output bandwidth of DAS and DSTS may be significantly different. The DAS measurement would be expected to yield an output phase result at the same rate as the pulse repetition of the test signal. However, the DSTS measurement would be expected to yield an output temperature and DC strain result over a longer time scale, e.g. once every few minutes as it generally requires a long-term average of several thousand pulses to calculate the output.

As noted above, the DAS signal can be used to obtain a differential value of the strain and/or rate of change of temperature in the optical fibre. Thus, once a reference temperature or strain value is obtained from the DSTS measurement, data from the DAS measurement can be used to update the strain and temperature measurements before the next data point is obtained from the DSTS measurement. In other words, data from the DAS measurement may be used to interpolate between data points obtained from the DSTS measurement. This may serve to increase the update rate and accuracy of the system.

When deployed on a standard fibre the DAS measurement may show a cross-sensitivity to strain and temperature. On the other hand, if the DAS measurement is deployed in either a temperature insensitive fibre or a strain decoupled loose clad buffered cable, the system can separate the effects of strain and temperature and this cross-sensitivity can be removed or reduced. Therefore, the DAS measurement could be employed to remove the cross-sensitivity inherent in the DSTS measurement, which may reduce the need to suppress CRN, and accurately measure the offset frequency of the Brillouin emission.

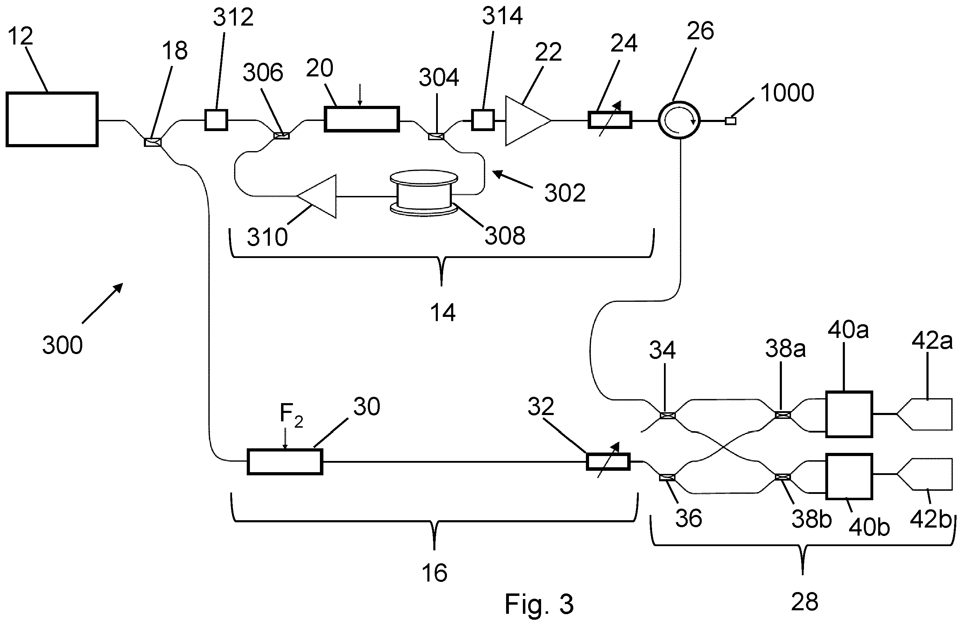

Fig. 3 shows a schematic diagram of an optical measurement system 300 according to an embodiment of the invention. The optical measurement system 300 is based on similar principles to those discussed above for system 10, may share any of the features discussed above in relation to Fig. 1. For convenience, features of the system 300 which are in common with the system 10 are labelled in Fig. 3 using the same reference numerals as in Fig. 1, and are not described again.

The system 300 is designed to use alternate pulses of the test signal for performing the DAS measurement and the DSTS measurement. Specifically, the system 300 is configured to alternate back and forth over time between a first step for performing the DAS measurement and a second step for performing the DSTS measurement. In the first step the pulse generator 20 generates a pulse of a first test signal, whilst in the second step the pulse generator 20 generates a pulse of a second test signal. Thus, the pulse generator 20 generates a sequence of pulses which alternate between the first test signal and the second test signal. The alternation between the first test signal and the second test signal may be controlled via the drive signal which is fed to the pulse generator 20. The first test signal and the second test signal may have different properties, such that each one may be specifically tailored for the detection of Rayleigh scattering and Brillouin scattering, respectively. In particular, properties of the first and second test signals such as pulse duration, pulse amplitude, and/or frequency shift may be adjusted to enhance detection of the corresponding scattering mechanism.

A benefit of performing the DAS measurement and the DSTS measurement on alternate pulses is that the calibration phase for the DSTS measurement may be performed without interrupting the DAS measurement. This may be achieved by applying a frequency shift to the second test signal, and varying the frequency shift applied to the second test signal across successive pulses of the second test signal. The inventors have found that applying a frequency shift to the test signal is equivalent to shifting the frequency of the light source for the purposes of the DAS and DSTS measurements. Thus, as the frequency shift applied to the second test signal can be controlled directly by controlling the pulse generator 20 (i.e. by controlling the drive signal for this component), the frequency of the light source 12 need not be varied for the calibration process. In addition to applying a frequency shift applied to second test signal in the second step, the same frequency shift may also be applied to the local oscillator signal (e.g. by controlling the drive signal for the modulator 30). In this manner, the frequency differences between the second test signal and the first and second local oscillator components may be kept constant, so that the DAS and DSTS signals remain at the same frequency across successive pulses of the second test signal.

Moreover, whilst the frequency shift applied to the second test signal is varied across successive pulses of the second test signal, the frequency of the first test signal and the LO signal may be kept constant across successive pulses of the of the first test signal. In this manner, the DAS measurement which is obtained from pulses of the first test signal is not affected by frequency variations occurring for the second test pulse.

As an example, in a calibration phase, the frequency shift applied by the pulse generator 20 to the second test signal may be swept across a bandwidth that is between 10 GHz to 20 GHz. This may be equivalent to sweeping the frequency of the light source 12 across a similar range. This may be done by incrementing the frequency shift applied by the pulse generator 20 to the second test signal between successive pulses of the second test signal. Any suitable increment of the frequency shift may be used. For example, the frequency shift may be incremented by steps of 1 GHz or less. Preferably, the increment of the frequency shift may be of the order of half the bandwidth required to represent Rayleigh scattering. This may enable up a loss profile for averaging out CRN to be efficiently built up, whilst ensuring that the increment is not overly large, which could result in potential data of interest being missed. Thus, as the bandwidth for representing Rayleigh scattering is typically of the order of 30 MHz to 200 MHz, the increment of the frequency shift may be of the order of 15 MHz. Additionally, the modulator 30 may be controlled so that the same frequency shift as for the second test signal is applied to the LO signal (including the first and second LO components), to keep the DAS and DSTS signals at the same frequency, as mentioned above.

Incrementally sweeping the frequency shift applied the second test signal over a wide bandwidth (e.g. 10 GHz to 20 GHz) over successive pulses of the second test signal results in a set of DAS signals obtained at different frequencies. This is equivalent to measuring DAS signals at a corresponding set of light source frequencies. In this manner, an ensemble average of the DAS signals (or Rayleigh scattering components) obtained from the pulses of the second test signal during the calibration phase can be performed, in order to determine a loss profile of the optical fibre 1000. This can then be used to normalise the DSTS signal. Such a calibration phase performed with pulses of the second test signal may be performed periodically, in order to ensure that an accurate loss profile of the optical fibre 1000 is maintained.

A bandwidth of the order of 10 GHz to 20 GHz can be achieved using known optical modulators and pulse generators. However, this is typically not as large a bandwidth as can be achieved by varying the frequency of the light source 12 itself, which can be of the order of 60 GHz. In order to increase a bandwidth that can be achieved via control of the pulse generator 20, a regenerative loop 302 can be applied to the pulse generator 20 in the launch stage 14, as shown in Fig. 3. An optical coupler 304 is connected to an output of the pulse generator 20, and splits the pulses emitted by the pulse generator 20 between the regenerative loop 302 and the input of amplifier 22. A further optical coupler 306 combines the light signal obtained from the light source 12 with a signal from the regenerative loop 302, and provides the combined signals as an input to the pulse generator 20. In this manner, a portion of the pulsed test signal emitted by the pulse generator 20 is provided as positive feedback to the pulse generator 20. The regenerative loop 302 may include a delay coil 308 and an amplifier 310. The delay coil 308 may have a length greater than a pulse length of the test signal generated by the pulse generator 20, to prevent a pulse from overlapping with itself. The amplifier 308 is for amplifying the signal transmitted along the loop, e.g. to compensate for losses in the regenerative loop 302. In this manner, the amplitude of a pulse generated by the pulse generator 20 remains constant over successive passes, as it passes many times through the frequency shifting element. This may enable a bandwidth for the pulsed test signals to be increased, so that measurements can be made across a wider range of frequencies. Additionally, the system 300 may comprise a first switch 312 connected at an input side of the regenerative loop 302, e.g. between the optical coupler 18 and the optical coupler 306. The system 300 may further comprise a second switch 314 connected at an output side of the regenerative loop 302, e.g. between the optical coupler 304 and the optical amplifier 22. In this manner, the first switch 312 can be controlled to let a pulse of the test signal into the regenerative loop 302, and the second switch 314 can be controlled to let a pulse out of the regenerative loop 302 so that it can be launched along the optical fibre 1000. Note that a regenerative loop need not necessarily be used for performing a calibration phase. For example a calibration phase may be performed on alternative pulses using the setup shown in Fig. 1.

Performing DAS and DSTS measurements on alternate pulses may further enable various parameters of the Brillouin scattering to be determined. In particular, if the frequency difference between the second LO component and the second test signal is varied upon successive pulses of the second test signal, by an amount which is less than a linewidth of the Brillouin scattering component, then a width, line-shape and peak of the Brillouin scattering component. Typically, the linewidth of Brillouin scattering is of the order of 20-100 MHz. Therefore, the system 300 may be configured to vary the frequency difference between the second LO component and the second test signal by an increment between 20 and 100 MHz, between successive pulses of the second test signal. This can be achieved by varying the frequency shift $F_2$ applied to the second LO component by the modulator 30, and/or by varying a frequency shift applied to the second test signal by the pulse generator 20.

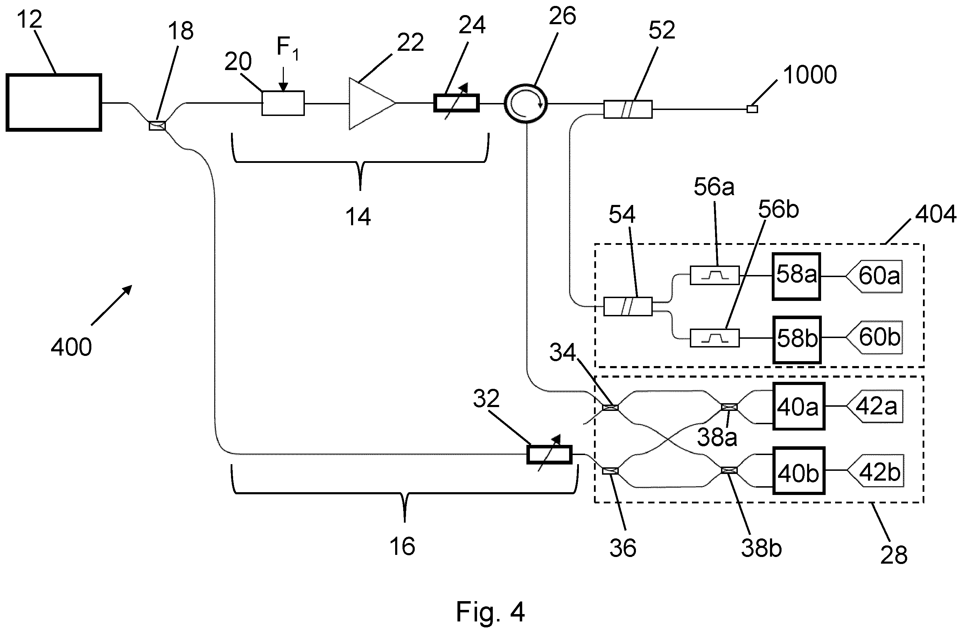

Fig. 4 shows a schematic diagram of an optical measurement system 400 according to an embodiment of the invention. The optical measurement system 400 is configured to enable simultaneous DAS and DTS measurements on a single optical path. The system 400 is based on similar principles to those discussed above for system 10, may share any of the features discussed above in relation to Fig. 1. For convenience, features of the system 400 which are in common with the system 10 are labelled in Fig. 4 using the same reference numerals as in Fig. 1, and are not described again.

The launch stage 14 of system 400 is configured similarly to that of system 10, such that it generates a pulsed test signal which is transmitted to the first port of a circulator 26, to be launched along an optical fibre 1000. As with system 10, the pulse generator 20 may apply a frequency shift $F_1$ to the pulsed test signal. However, the local oscillator stage 16 of system 400 is different compared to that of system 10. In particular, no modulator is provided in the local oscillator stage 16 of system 400. In the example shown, the local oscillator stage 16 of system 400 only includes an attenuator 32 for controlling a power of the LO signal. Thus, the LO signal generated in system 400 simply corresponds to the original light signal received from the light source 12, whose power may be adjusted by the attenuator 32. In other words, the LO signal in system 400 includes only one component, corresponding to the original light signal from the light source 12.

The second port of the circulator 26 in system 400 is coupled to the optical fibre 1000 via a wavelength splitter 52. The wavelength splitter 52 is configured to transmit the pulsed test signal to the optical fibre 1000. As discussed above, propagation of the test signal along the optical fibre 1000 results in a scattered signal having multiple scattering components, as illustrated in Fig. 2a. The wavelength splitter 52 is configured to split the scattered signal received from the optical fibre 1000, such that the Rayleigh and Brillouin scattering components are transmitted back to the second port of the circulator 26, and such that the Raman scattering component is reflected and transmitted along a separate path. The wavelength splitter 52 splits the scattering components along the different paths on the basis of the frequencies (or wavelengths) of the scattering components. As an example, the wavelength splitter 52 may be a wavelength division demultiplexer (WDM).

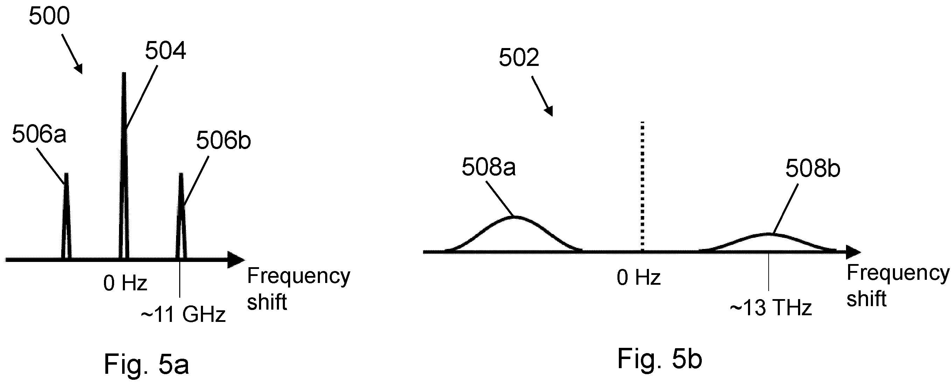

The third port of the circulator 26 is connected to a first detector stage 28, such that the Rayleigh and Brillouin scattering components are received at the first detector stage 28. The wavelength splitter 52 is further coupled to a second detector stage 404, and configured to transmit the Raman scattering signal to the second detector stage 404. Fig. 5a illustrates a spectrum 500 of the scattering components which are received at the first detector 28, whilst Fig. 5b illustrates a spectrum 502 the scattering components which are received at the second detector stage 404. The horizontal axes in Figs. 5a and 5b represent a frequency shift relative to the test signal. As can be seen in Fig. 5a, the signal received at the first detector stage 28 includes the Rayleigh scattering component 504 at 0 Hz, as well as the Stokes and Anti-Stokes parts 506a, 506b of the Brillouin scattering component. Similarly to the example of Fig. 2a, the Brillouin frequency shift is at about 11 GHz in Fig. 5a. As can be seen in Fig. 5b, the signal received at the second detector stage 404 includes the Stokes and Anti-Stokes parts 508a, 508b of the Raman scattering component. Similarly to the example of Fig. 2a, the Raman frequency shift is at about 13 THz in Fig. 5b.

The first detector stage 28 of system 400 operates in a corresponding manner to the detector stage 28 of system 10. In particular, the first detector stage 28 interferes different polarisation states of the received scattering components with the LO signal, to produce an output signal for each polarisation state. In this case however, as the LO signal only includes a single, non-frequency-shifted component, the output signal does not include a component corresponding to the DSTS signal discussed above. The output signal will include a component which is at a frequency $F_1$, corresponding to the frequency shift between the test signal and the LO signal (which is at the same frequency as the light source 12). Thus, the first detector stage 28 of system 400 provides a DAS signal, in a similar manner to the detector stage 28 of system 10.

The second detector stage 404 is configured to enable a DTS measurement. Specifically, the second detector stage 404 comprises a wavelength splitter 54 (e.g. a WDM), which splits the Raman Stokes and Anti-Stokes components into two separate paths for detecting each component. A bandpass filter 56a, 56b is applied to each of the Stokes and Anti-Stokes components, in order to isolate each component. The second detector stage 404 includes a first detector 58a for detecting an amplitude of the Stokes component of the Raman scattering, and a second detector 58b for detecting an amplitude of the Anti-Stokes component of the Raman scattering. The detectors 58a, 58b may be high gain detectors, such as avalanche photodiode (APD) detectors, or photomultiplier detectors. The output from each detector 58a, 58b is measured by a respective analog-to-digital converter 60a, 60b. The ratio of the Stokes and Anti-Stokes components may then be calculated, to determine the temperature at a scattering location on the optical fibre 1000.

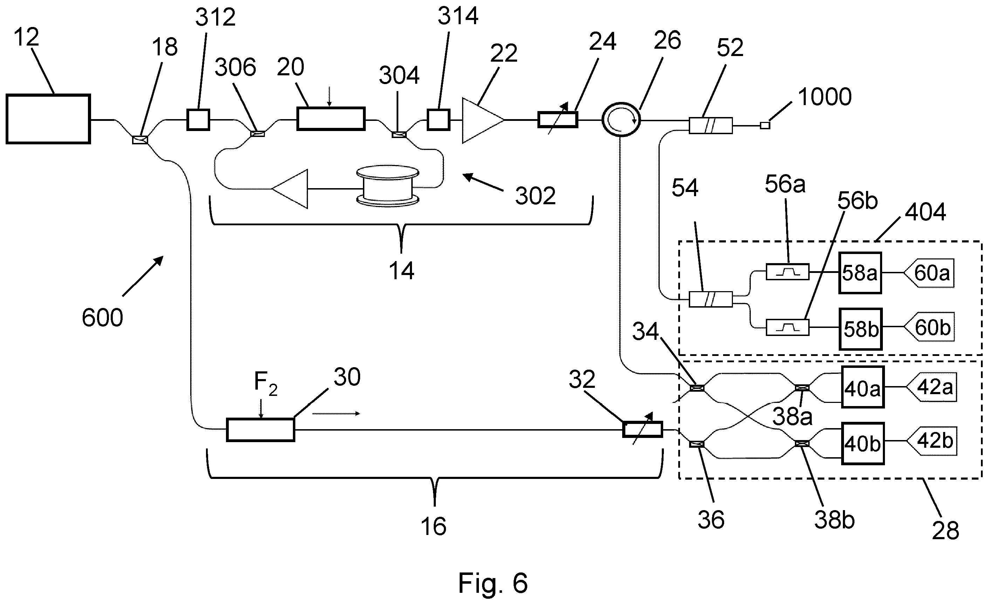

Fig. 6 shows a schematic diagram of an optical measurement system 600 according to an embodiment of the invention. The optical measurement system 600 is configured to enable DAS, DTS and DSTS measurements on a single optical path. The optical measurement system 600 represents a combination of systems 300 and 400 discussed above, and may share any of the features discussed above in relation any of the previous embodiments. For convenience, features of the system 600 which are in common with systems of previous embodiments are labelled in Fig. 6 using the same reference numerals as for those embodiments, and are not described again.

The system 600 is based on the architecture of the system 300, and further includes the second detection stage 404 of system 400. A wavelength splitter 52 is connected to the optical fibre 1000, to split the components of the scattered signal as discussed above in relation to the system 400. Thus, the first detector stage 28 receives the LO signal from the local oscillator stage 16 and the Rayleigh and Brillouin components of the scattered signal. The LO signal includes a first non-frequency shifted component and a second frequency-shifted component (e.g. as shown in Fig. 2b). Thus, at the first detector stage 28, a DAS signal at the difference frequency between the Rayleigh scattering component and the first LO component can be obtained, and a DSTS signal at the difference frequency between the Brillouin scattering component and the second LO component can be obtained. As discussed in relation to system 300, the launch stage 14 of system 600 can be controlled to generate alternate pulses for the DAS and DSTS measurements. Further, as discussed above in relation to system 400, the Raman scattering component is transmitted to the second detector stage 404, which can be used to perform a DTS measurement. The system 600 can therefore yield independent measurements of DC temperature, DC strain, as well as AC temperature and AC strain of the optical fibre 1000, which may enable a high level of flexibility and accuracy.

In embodiments discussed above, combined DAS and DSTS measurements are performed by generating a local oscillator signal with two components that are shifted in frequency relative to one another. An alternative approach for enabling combined DAS and DSTS measurements is to instead use a test signal which includes two components that are shifted in frequency relative to one another, which may yield analogous results to the approaches described above. Such an alternative approach for combined DAS and DSTS measurements will now be described, with reference to the optical measurement system 10 of Fig. 1. However, this alternative approach for combined DAS and DSTS may also be performed, for example, with the system 300 of Fig. 6, e.g. if it is also desired to perform DTS measurements.

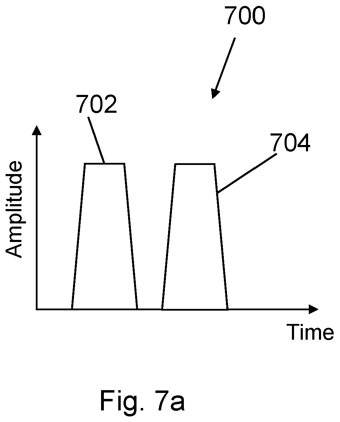

In this approach, the launch stage 14 is configured to generate a test signal having two components at different frequencies. Fig. 7a shows an example test signal 700 that can be generated by the launch stage 14 and launched along the optical fibre 1000. The test signal 700 includes a first component in the form of a first pulse 702 which is followed by a second component in the form of a second pulse 704. The first pulse 702 is at a first frequency which is shifted relative to the light source 12 by an amount $F_{T1}$, and the second pulse 704 is at a second frequency which is shifted relative to the light source 12 by an amount $F_{T2}$. The first pulse 702 is used for probing Rayleigh scattering. Thus, similarly to the discussions above, the frequency shift $F_{T1}$ of the first pulse may for example be in the range of 100-200 MHz. The second pulse 704 is used for probing Brillouin scattering. Therefore, the frequency shift $F_{T2}$ may be similar to the frequency shift used for the second component of the local oscillator signal discussed above, e.g. in the range 10-11 GHz. Note however that the direction of the frequency shift $F_{T2}$ may be in the opposite direction to the frequency shift $F_2$ applied to the second component of the LO signal in the other approaches discussed above. Of course, the order in which the pulses 702, 704 are produced may be swapped compared to the example shown in Fig. 7a.

The test signal 700 may be generated by controlling the pulse generator 20, which may be in the form of an IQ modulator. In particular, the sequence of pulses 702 and 704 may be produced by modulating the amplitude and frequency of the signal over time with the pulse generator 20. The test signal 700 may then amplified by the optical amplifier 22 and passed through the attenuator 24, before being launched into the optical fibre 1000. The first pulse 702 and the second pulse 704 may be generated such that there is a suitable delay between the two pulses. For instance, the delay between the two pulses may be set so that cross phase modulation (XPM) between the two pulses is minimised (avoided), and so that the two pulses do not stimulate Brillouin emission for one another. As an example, the delay between the two pulses may be set such that there is a separation of approximately 100 m between the two pulses in the optical fibre 1000.

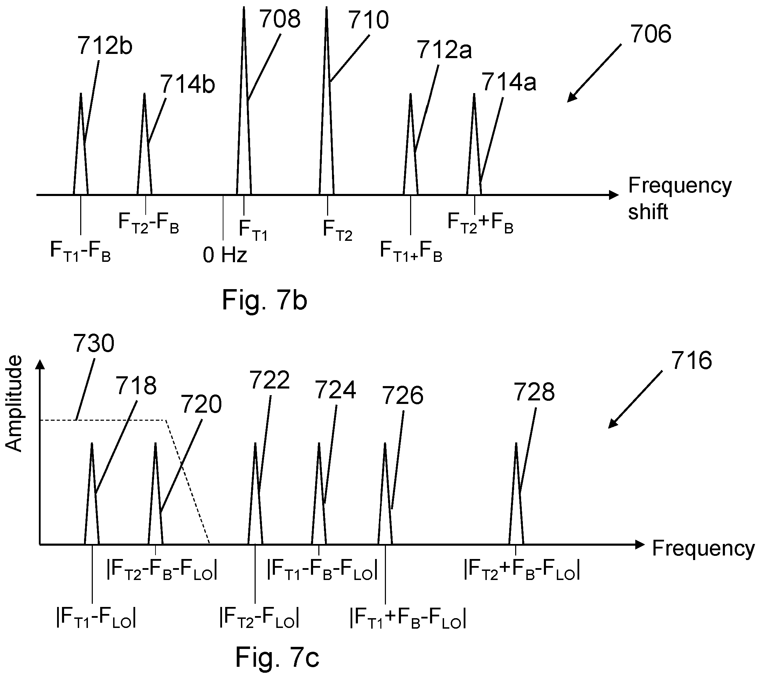

Fig. 7b shows an example spectrum 706 of a scattered signal resulting from launching the test signal 700 along the optical fibre 1000. The first pulse 702 of the test signal results in a first Rayleigh scattering component 708 at $F_{T1}$, whilst the second pulse 704 results in a second Rayleigh scattering component 710 at $F_{T2}$. Additionally, Brillouin scattering of the first pulse 702 results in first Brillouin scattering components 712a, 712b at $F_{T1} \pm F_B$, whilst Brillouin scattering of the second pulse 704 results in second Brillouin scattering components 714a, 714b at $F_{T2} \pm F_B$. Here, $F_B$ refers to the frequency shift caused by the Brillouin scattering. The horizontal axis in Fig. 7b represents a frequency shift relative to the light source 12.

In this approach, the local oscillator stage 16 is configured to generate an LO signal with a single, non-frequency-shifted component. Thus, the LO signal is at the same frequency as the light source 12. Accordingly, the modulator 30 may be controlled so that no frequency shift is applied to the received light signal from the light source 12. Alternatively, the modulator 30 may be dispensed with in this approach, as no frequency modulation of the LO signal may be required.

When the scattered signal 706 received from the optical fibre 1000 is interfered with the LO signal on the detectors 40a, 40b, a series of interference components at different frequencies will be generated. Fig. 7c shows an example spectrum 716 of the interference components which may be obtained at one of the detectors 40a, 40b due to the interference with the LO signal. The spectrum 716 includes interference components at the following frequencies, where $F_{LO}$ is the frequency of the LO signal (which is the same as the frequency of the light source 12):

- $|F_{T1}-F_{LO}|$, reference 718 in Fig. 7c
- $|F_{T2}-F_B-F_{LO}|$, reference 720 in Fig. 7c
- $|F_{T2}-F_{LO}|$, reference 722 in Fig. 7c
- $|F_{T1}-F_B-F_{LO}|$, reference 724 in Fig. 7c
- $|F_{T1}+F_B-F_{LO}|$, reference 726 in Fig. 7c
- $|F_{T2}+F_B-F_{LO}|$, reference 728 in Fig. 7c.

Typically, only the interference components 718 and 720 may be within the detection bandwidth of the detectors 40a, 40b, depicted by the dashed line 730 in Fig. 7c. Accordingly, the interference component 718 at $|F_{T1}-F_{LO}|$ resulting from the first Rayleigh scattering component 708 provides a DAS signal, whilst the interference component 720 at $|F_{T2}-F_B-F_{LO}|$ which results from the Stokes Brillouin scattering component 714b provides a DSTS signal. The other interference components which are outside the detection bandwidth 730 may be disregarded. As an example of the approach depicted in Figs. 7a-7c, the detection bandwidth 730 may be of the order of 1 GHz. The Brillouin shift $F_B$ is of the order 10.9 GHz, and the Rayleigh probe frequency $F_{T1}$ at about 100 MHz offset relative to the LO signal and the Brillouin probe frequency $F_{T2}$ at around -10.4 GHz. This would provide a DSTS signal at about 500 MHz with about $\pm 300$ MHz dynamic range, equating to temperature range of $\pm 270$ K or an equivalent strain range of the order of $\pm 6500$ $\mu\varepsilon$.

In the example illustrated in Figs. 7a-7c, $F_{T1}$ and $F_{T2}$ are set such that $F_{T2} > F_{T1}$, such that the Stokes Brillouin scattering component 714b gives rise to the detected DSTS signal. If instead the Anti-Stokes Brillouin scattering component is to be used, then $F_{T1}$ and $F_{T2}$ may be set such that $F_{T2} < F_{T1}$. Note that, for illustration purposes, the various signals are depicted schematically in Figs. 7a-7c, and that relative signal shapes and amplitudes may vary in practice.

A benefit of the approach depicted in Figs. 7a-7c where the test signal includes separate components for probing Rayleigh scattering and Brillouin scattering is that the first pulse 702 and the second pulse 704 can be controlled independently, such that they can be respectively optimised for DAS and DSTS operation. For example, the launch powers of the first pulse 702 and the second pulse 704 can be controlled independently. Thus the power of the first pulse 702 may be optimised for detection of Rayleigh scattering, whilst the power of the second pulse 704 may be optimised for detection of Brillouin scattering. This may allow for higher SNR of the DSTS signal than would otherwise be possible. As an example, the SNR of the detected DAS signal can be monitored in real-time whilst the power of the first pulse 702 is adjusted, until a peak in the SNR is reached. A similar procedure may be performed by monitoring the DSTS signal, to maximise SNR of the DSTS signal. The pulse widths of the first pulse 702 and the second pulse 704 may also be adjusted independently, to allow a spatial resolution of the DAS and DSTS measurements to be set independently. Moreover, the use of an LO signal with only a single component may also yield a 3 dB benefit in SNR, as a shot noise of the LO signal may be split between the DAS and DSTS signals equally.

In some cases, the first approach described above in relation to Figs. 2a-2b and the second approach described above in relation to Figs. 7a-7c may be combined. In particular, both the LO signal and test signal may include first and second components, where the second components are shifted in frequency to bring the DSTS signal into the detection bandwidth. For example, the LO signal may include a first, non-frequency shifted component and a second component that is frequency-shifted. The test signal may then be as shown in Fig. 7a, with the first pulse 702 having no frequency shift, and the second pulse 704 being frequency-shifted. The sum of the frequency shifts applied to the second component of the LO signal and the second pulse of the test signal may be approximately equal to 10 GHz, so that together the frequency shifts result in a DSTS signal that is within the detection bandwidth, with other interference cross-terms still remaining outside the detection bandwidth. For example, the shift applied to the second component of the LO signal may be approximately half of the Brillouin shift, e.g. 5 GHz, and the shift applied to the second pulse 704 may be approximately half of the Brillouin shift, e.g. 5 GHz. Such a combined approach may be useful, for example, when the optical fibre is in a non-uniform environment requiring a dynamic range of the system as a function.

The below tables show example parameters of Brillouin scattering and Raman scattering in an optical fibre. In particular, Table 2 below shows example dependencies of the Brillouin scattering component on temperature and strain of the optical fibre. These dependencies may be used to obtain estimates of strain and/or temperature of the fibre from the DSTS signals obtained from embodiments discussed above. Due to the dependency of the Brillouin scattering component on both strain and temperature, in order to separate the strain and temperature effects, it may be necessary to determine both the frequency and the amplitude of the Brillouin scattering component. Table 2 also shows an example dependency of the Raman Anti-Stokes / Stokes ratio, which may be used to calculate the temperature of the fibre from the DTS signals obtained from embodiments discussed above.

Table 1: Examples of properties of Brillouin scattering and Raman scattering

| Property | Brillouin scattering | Raman scattering |
|---|---|---|
| Gain Bandwidth | 20-100 MHz | ~5 THz |
| Peak Gain Coefficient | $5 \times 10^{-11}$ m/W | $1 \times 10^{-13}$ m/W |
| Stokes Shift | 11 GHz | 13 THz |
| Corresponding Wavelength Shift | 0.09 nm | 104 nm |
| dB weaker than Rayleigh | ~20 dB | ~30 dB |

Table 2: Example dependencies of Brillouin and Raman scattering

| Property | Temperature Dependence | Strain Dependence |
|---|---|---|
| Brillouin Intensity | +0.33 % / K | $-8 \times 10^{-4}$ % / $\mu\varepsilon$ |
| Brillouin Frequency | +1.1 MHz / K | +0.05 MHz / $\mu\varepsilon$ |
| Raman Anti-Stokes / Stokes Ratio | +0.8 % / K | N/A |

Although a few preferred embodiments have been shown and described, it will be appreciated by those skilled in the art that various changes and modifications might be made without departing from the scope of the invention, as defined in the appended claims.

All of the features disclosed in this specification (including any accompanying claims, abstract and drawings), and/or all of the steps of any method or process so disclosed, may be combined in any combination covered by the appended claims, except where at least some of such features and/or steps are mutually exclusive. In particular, various combinations of the systems 10, 300, 400 and 600 discussed above may be combined, in order to achieve various combinations of DAS, DTS and DSTS measurements on a same optical path.

Each feature disclosed in this specification (including any accompanying claims, abstract and drawings) may be replaced by alternative features serving the same, equivalent or similar purposes, if covered by the appended claims, unless expressly stated otherwise. Thus, unless expressly stated otherwise, each feature disclose is one example only of a generic series of equivalent or similar features.

The invention is not restricted to the details of the foregoing embodiment (s) but to the appended claims. The invention extends to any novel one, or any novel combination, of the features disclosed in this specification (including any accompanying claims, abstract and drawings), or to any novel one, or any novel combination, of the steps of any method or process so disclosed, if covered by the appended claims.

**Claims**

1. An optical measurement system (10, 300, 400) comprising:

   a coherent light source (12) configured to generate a light signal;
   a launch stage (14) configured to receive the light signal from the light source and generate a pulsed test signal and launch the test signal along an optical path (1000);
   a local oscillator stage (16) configured to generate a local oscillator signal, wherein local oscillator signal comprises a first local oscillator component and a second local oscillator component which is frequency-shifted relative to the first local oscillator component; and
   a first detector stage (28) configured to:

      receive the local oscillator signal from the local oscillator stage and a scattered signal from the optical path, wherein the scattered signal comprises a Rayleigh scattering component and a Brillouin scattering component; and
      interfere the local oscillator signal with the scattered signal to produce an output signal having a first component at a first frequency corresponding to a frequency difference between the first local oscillator component and the Rayleigh scattering component, and a second component at a second frequency corresponding to a frequency difference between the second local oscillator component and the Brillouin scattering component.

2. An optical measurement system according to claim 1, wherein the local oscillator stage comprises a single sideband modulator (30) which is configured to receive the light signal from the light source and generate the second local oscillator component; and optionally
   wherein the single sideband modulator is further configured to not fully suppress the light signal received from the light source, such that the first local oscillator component corresponds to a non-fully suppressed version of the light signal from the light source.

3. An optical measurement system according to any preceding claim, wherein the first detector stage has a detection bandwidth that is configured to cover the first frequency, and wherein the frequency shift of the second local oscillator component is set such that the second frequency is within the detection bandwidth; and optionally
   wherein the detection bandwidth is between 100 MHz and 2 GHz.

4. An optical measurement system according to any preceding claim, wherein the second local oscillator component is frequency-shifted relative to the light source by a frequency in the range of 8 GHz to 12 GHz; and/or
   wherein the launch stage is configured to frequency-shift the test signal relative to the light source by a frequency in the range of 50 MHz to 500 MHz.

5. An optical measurement system according to any preceding claim, wherein:

   the system is configured to alternate over time between a first step for detecting the first scattering component and a second step for detecting the second scattering component; and
   the launch stage is configured to generate a first test signal in the first step and a second test signal in the second step, the first test signal and the second test signal having a different property; and optionally

   wherein the system is configured to control the launch stage to vary a frequency shift applied to the second test signal upon successive iterations of the second step.

6. An optical measurement system according to any preceding claim, wherein the launch stage comprises a regenerative loop (302) configured to provide a portion of the pulsed test signal as positive feedback for the launch stage.

7. An optical measurement system according to any preceding claim, wherein the scattered signal further comprises a Raman scattering component, the system further comprising:

a second detector stage (404); and
a wavelength splitter (52) configured to split the scattered signal such that the first scattering component and the second scattering component are transmitted to the first detector stage, and such that the Raman scattering component is transmitted to the second detector stage;
wherein the second detector stage is configured to split the Raman scattering component into a Stokes component and an Anti-Stokes component, and to detect an amplitude of each of the Stokes component and the Anti-Stokes component.

8. An optical measurement system (10, 300, 400) comprising:

a coherent light source (12) configured to generate a light signal;
a launch stage (14) configured to receive the light signal from the light source and generate a pulsed test signal and launch the test signal along an optical path (1000), wherein the test signal comprises a first test signal component a second test signal component which is frequency-shifted relative to the first test signal component;
a local oscillator stage (16) configured to generate a local oscillator signal; and
a first detector stage (28) configured to:

receive the local oscillator signal from the local oscillator stage and a scattered signal from the optical path, wherein the scattered signal comprises a Rayleigh scattering component resulting from scattering of the first test signal component and a Brillouin scattering component resulting from scattering of the second test signal component; and
interfere the local oscillator signal with the scattered signal to produce an output signal having a first component at a first frequency corresponding to a frequency difference between the local oscillator signal and the Rayleigh scattering component, and a second component at a second frequency corresponding to a frequency difference between the local oscillator signal and the Brillouin scattering component.

9. An optical measurement system (400) comprising:

a coherent light source (12) configured to generate a light signal;
a launch stage (14) configured to receive the light signal from the light source and generate a pulsed test signal and launch the test signal along an optical path;
a local oscillator stage (16) configured generate a local oscillator signal;
a first detector stage (28) and a second detector stage (404); and
a wavelength splitter (52) configured to receive a scattered signal from the optical path, and split the scattered signal into a first scattering component which is transmitted to the first detector stage and a Raman scattering component which is transmitted to the second detector stage;
wherein the first detector stage is configured to interfere the local oscillator signal with the scattered signal to produce an output signal having a frequency corresponding to a frequency difference between the local oscillator signal and the first scattering component;
wherein the second detector stage is configured to split the Raman scattering component into a Stokes component and an Anti-Stokes component, and to detect an amplitude of each of the Stokes component and the Anti-Stokes component; and optionally

wherein the first scattering component is a Rayleigh scattering component or a Brillouin scattering component.

10. A method for operating an optical measurement system (10, 300, 400), the method comprising:

generating, using a coherent light source (12), a light signal, and conveying the light signal to a launch stage (14);
generating, at the launch stage, a pulsed test signal and launching the test signal along an optical path (1000);
generating, at a local oscillator stage (16), a local oscillator signal, wherein local oscillator signal comprises a first local oscillator component and a second local oscillator component which is frequency-shifted relative to the first local oscillator component;

receiving, at a first detector stage (28), the local oscillator signal from the local oscillator stage and a scattered signal from the optical path, wherein the scattered signal comprises a Rayleigh scattering component and a Brillouin scattering component; and

interfering, by the first detector stage, the local oscillator signal with the scattered signal to produce an output signal having a first component at a first frequency corresponding to a frequency difference between the first local oscillator component and the Rayleigh scattering component, and a second component at a second frequency corresponding to a frequency difference between the second local oscillator component and the Brillouin scattering component.

11. A method according to claim 10, wherein the first detector stage has a detection bandwidth that covers the first frequency, the method further comprising:

setting the frequency shift of the second component of the local oscillator signal relative to the light source such that the second frequency is within the detection bandwidth.

12. A method according to claims 10 or 11, further comprising:

alternating over time between a first step in which the launch stage generates a first test signal and a second step in which the launch stage generates a second test signal, the first test signal and the second test signal having a different property; and optionally

further comprising varying a frequency shift applied to the second test signal upon successive iterations of the second step; and optionally

further comprising determining a loss profile of the optical path based on an average of the Rayleigh scattering components obtained across multiple iterations of the second step.

13. A method according to one of claims 10 to 12, wherein the scattered signal further comprises a Raman scattering component, the method further comprising:

splitting, with a wavelength splitter (52), the scattered signal such that the first scattering component and the second scattering component are transmitted to the first detector stage, and such that the Raman scattering component is transmitted to a second detector stage (404);

splitting, at the second detector stage, the Raman scattering component into a Stokes component and an Anti-Stokes component, and detecting an amplitude of each of the Stokes component and the Anti-Stokes component.

14. A method for operating an optical measurement system (10, 300, 400), the method comprising:

generating, using a coherent light source (12), a light signal, and conveying the light signal to a launch stage (14);

generating, at the launch stage, a pulsed test signal and launching the test signal along an optical path, wherein the test signal comprises a first test signal component and a second test signal component which is frequency-shifted relative to first test signal component;

generating, at a local oscillator stage (16), a local oscillator signal;

receiving, at a first detector stage (28), the local oscillator signal from the local oscillator stage and a scattered signal from the optical path, wherein the scattered signal comprises a Rayleigh scattering component resulting from scattering of the first test signal component and a Brillouin scattering component resulting from scattering of the second test signal component; and

interfering, by the first detector stage, the local oscillator signal with the scattered signal to produce an output signal having a first component at a first frequency corresponding to a frequency difference between the local oscillator signal and the Rayleigh scattering component, and a second component at a second frequency corresponding to a frequency difference between the local oscillator signal and the Brillouin scattering component.

15. A method for operating an optical measurement system (400), the method comprising:

generating, using a coherent light source (12), a light signal, and conveying the light signal to a launch stage;

generating, at the launch stage (14), a pulsed test signal and launching the test signal along an optical path;

generating, at a local oscillator stage (16), a local oscillator signal;

receiving, at a wavelength splitter (52), a scattered signal from the optical path, and splitting the scattered signal into a first scattering component which is transmitted to a first detector stage (28) and a Raman scattering component which is transmitted to a second detector stage (404);

interfering, at the first detector stage, the local oscillator signal with the scattered signal to produce an output signal having a frequency corresponding to a frequency difference between the local oscillator signal and the first scattering component; and

splitting, at the second detector stage, the Raman scattering component into a Stokes component and an Anti-Stokes component, and detecting an amplitude of each of the Stokes component and the Anti-Stokes component; and optionally wherein the first scattering component is a Rayleigh scattering component or a Brillouin scattering component.

**Patentansprüche**

1. Optisches Messsystem (10, 300, 400), das Folgendes umfasst:

eine kohärente Lichtquelle (12), die dazu ausgelegt ist, ein Lichtsignal zu erzeugen;

eine Sendestufe (14), die dazu ausgelegt ist, das Lichtsignal von der Lichtquelle zu empfangen und ein gepulstes Testsignal zu erzeugen und das Testsignal entlang eines optischen Pfads auszusenden (1000);

eine lokale Oszillatorstufe (16), die dazu ausgelegt ist, ein lokales Oszillatorsignal zu erzeugen, wobei das lokale Oszillatorsignal eine erste lokale Oszillatorkomponente und eine zweite lokale Oszillatorkomponente umfasst, die relativ zu der ersten lokalen Oszillatorkomponente frequenzverschoben ist; und

eine erste Detektorstufe (28), die für Folgendes ausgelegt ist:

Empfangen des lokalen Oszillatorsignals von der lokalen Oszillatorstufe und eines gestreuten Signals von dem optischen Pfad, wobei das gestreute Signal eine Rayleigh-Streuungskomponente und eine Brillouin-Streuungskomponente umfasst; und

Interferieren des lokalen Oszillatorsignals mit dem gestreuten Signal, um ein Ausgangssignal zu erzeugen, das eine erste Komponente bei einer ersten Frequenz, die einer Frequenzdifferenz zwischen der ersten lokalen Oszillatorkomponente und der Rayleigh-Streuungskomponente entspricht, und eine zweite Komponente bei einer zweiten Frequenz, die einer Frequenzdifferenz zwischen der zweiten lokalen Oszillatorkomponente und der Brillouin-Streuungskomponente entspricht, aufweist.

2. Optisches Messsystem nach Anspruch 1, wobei die lokale Oszillatorstufe einen Einzelseitenbandmodulator (30) umfasst, der dazu ausgelegt ist, das Lichtsignal von der Lichtquelle zu empfangen und die zweite lokale Oszillatorkomponente zu erzeugen; und

gegebenenfalls

der Einzelseitenbandmodulator ferner dazu ausgelegt ist, das Lichtsignal von der Lichtquelle nicht vollständig zu unterdrücken, sodass die erste lokale Oszillatorkomponente einer nicht vollständig unterdrückten Version des Lichtsignals von der Lichtquelle entspricht.

3. Optisches Messsystem nach einem der vorangegangenen Ansprüche, wobei die erste Detektorstufe eine Detektionsbandbreite aufweist, die dazu ausgelegt ist, die erste Frequenz abzudecken, und wobei die Frequenzverschiebung der zweiten lokalen Oszillatorkomponente derart eingestellt ist, dass die zweite Frequenz innerhalb der Detektionsbandbreite liegt; und wobei gegebenenfalls

die Detektionsbandbreite zwischen 100 MHz und 2 GHz beträgt.

4. Optisches Messsystem nach einem der vorangegangenen Ansprüche, wobei die zweite lokale Oszillatorkomponente relativ zu der Lichtquelle um eine Frequenz im Bereich von 8 GHz bis 12 GHz frequenzverschoben ist; und/oder wobei die Sendestufe dazu ausgelegt ist, das Testsignal relativ zur Lichtquelle um eine Frequenz im Bereich von 50 MHz bis 500 MHz frequenzzuverschieben.

5. Optisches Messsystem nach einem der vorangegangenen Ansprüche, wobei:

das System derart ausgelegt ist, dass es über der Zeit zwischen einem ersten Schritt zum Detektieren der ersten Streuungskomponente und einem zweiten Schritt zum Detektieren der zweiten Streuungskomponente alterniert; und

die Sendestufe dazu ausgelegt ist, im ersten Schritt ein erstes Testsignal und im zweiten Schritt ein zweites Testsignal zu erzeugen, wobei das erste Testsignal und das zweite Testsignal eine unterschiedliche Eigenschaft aufweisen; und wobei gegebenenfalls

das System dazu ausgelegt ist, die Sendestufe zu steuern, um eine Frequenzverschiebung, die an das zweite Testsignal angelegt wird, bei darauffolgenden Wiederholungen des zweiten Schritts zu variieren.

6. Optisches Messsystem nach einem der vorangegangenen Ansprüche, wobei die Sendestufe eine Regenerationsschleife (302) umfasst, die dazu ausgelegt ist, einen Teil des gepulsten Testsignals als positive Rückkopplung für die Sendestufe bereitzustellen.

7. Optisches Messsystem nach einem der vorangegangenen Ansprüche, wobei das gestreute Signal ferner eine Raman-Streuungskomponente umfasst, wobei das System ferner Folgendes umfasst:

eine zweite Detektorstufe (404); und
einen Wellenlängenteiler (52), der dazu ausgelegt ist, das gestreute Signal derart zu teilen, dass die erste Streuungskomponente und die zweite Streuungskomponente an die erste Detektorstufe durchgelassen werden und dass die Raman-Streuungskomponente an die zweite Detektorstufe durchgelassen wird;
wobei die zweite Detektorstufe dazu ausgelegt ist, die Raman-Streuungskomponente in eine Stokes-Komponente und eine Anti-Stokes-Komponente zu teilen und eine Amplitude von jeder aus der Stokes-Komponente und der Anti-Stokes-Komponente zu detektieren.

8. Optisches Messsystem (10, 300, 400), umfassend:

eine kohärente Lichtquelle (12), die dazu ausgelegt ist, ein Lichtsignal zu erzeugen;
eine Sendestufe (14), die dazu ausgelegt ist, das Lichtsignal von der Lichtquelle zu empfangen und ein gepulstes Testsignal zu erzeugen und das Testsignal entlang eines optischen Pfads auszusenden (1000), wobei das Testsignal eine erste Testsignalkomponente und eine zweite Testsignalkomponente, die relativ zur ersten Testsignalkomponente frequenzverschoben ist, umfasst;
eine lokale Oszillatorstufe (16), die dazu ausgelegt ist, ein lokales Oszillatorsignal zu erzeugen; und
eine erste Detektorstufe (28), die für Folgendes ausgelegt ist:

Empfangen des ersten lokalen Oszillatorsignals von der lokalen Oszillatorstufe und eines gestreuten Signals von dem optischen Pfad, wobei das gestreute Signal eine Rayleigh-Streuungskomponente, die aus dem Streuen der ersten Testsignalkomponente resultiert, und eine Brillouin-Streuungskomponente, die aus dem Streuen der zweiten Testsignalkomponente resultiert, umfasst; und
Interferieren des lokalen Oszillatorsignals mit dem gestreuten Signal, um ein Ausgangssignal zu erzeugen, das eine erste Komponente bei einer ersten Frequenz, die einer Frequenzdifferenz zwischen dem lokalen Oszillatorsignal und der Rayleigh-Streuungskomponente entspricht, und eine zweite Komponente bei einer zweiten Frequenz, die einer Frequenzdifferenz zwischen dem lokalen Oszillatorsignal und der Brillouin-Streuungskomponente entspricht, aufweist.

9. Optisches Messsystem (400), umfassend:

eine kohärente Lichtquelle (12), die dazu ausgelegt ist, ein Lichtsignal zu erzeugen;
eine Sendestufe (14), die dazu ausgelegt ist, das Lichtsignal von der Lichtquelle zu empfangen und ein gepulstes Testsignal zu erzeugen und das Testsignal entlang eines optischen Pfads auszusenden;
eine lokale Oszillatorstufe (16), die dazu ausgelegt ist, ein lokales Oszillatorsignal zu erzeugen;
eine erste Detektorstufe (28) und eine zweite Detektorstufe (404); und
einen Wellenlängenteiler (52), der dazu ausgelegt ist, ein gestreutes Signal von dem optischen Pfad zu empfangen und das gestreute Signal in eine erste Streuungskomponente, die an die erste Detektorstufe durchgelassen wird, und eine Raman-Streuungskomponente, die an die zweite Detektorstufe durchgelassen wird, zu teilen;
wobei die erste Detektorstufe dazu ausgelegt ist, das lokale Oszillatorsignal mit dem gestreuten Signal zu interferieren, um ein Ausgangssignal zu erzeugen, das eine Frequenz aufweist, welche einer Frequenzdifferenz zwischen dem lokalen Oszillatorsignal und der ersten Streuungskomponente entspricht;
wobei die zweite Detektorstufe dazu ausgelegt ist, die Raman-Streuungskomponente in eine Stokes-Komponente und eine Anti-Stokes-Komponente zu teilen und eine Amplitude von jeder aus der Stokes-Komponente und der Anti-Stokes-Komponente zu detektieren; und wobei gegebenenfalls
die erste Streuungskomponente eine Rayleigh-Streuungskomponente oder eine Brillouin-Streuungskomponente ist.

10. Verfahren zum Betreiben eines optischen Messsystems (10, 300, 400), wobei das Verfahren Folgendes umfasst:

Erzeugen eines Lichtsignals unter Verwendung einer kohärenten Lichtquelle (12) und Übertragen des Lichtsignals an eine Sendestufe (14);

Erzeugen eines gepulsten Testsignals an der Sendestufe und Aussenden des Testsignals entlang eines optischen Pfads (1000);

Erzeugen eines lokalen Oszillatorsignals an einer lokalen Oszillatorstufe (16), wobei das lokale Oszillatorsignal eine erste lokale Oszillatorkomponente und eine zweite lokale Oszillatorkomponente umfasst, die relativ zu der ersten lokalen Oszillatorkomponente frequenzverschoben ist; und

Empfangen des lokalen Oszillatorsignals von der lokalen Oszillatorstufe und eines gestreuten Signals von dem optischen Pfad an einer ersten Detektorstufe (28), wobei das gestreute Signal eine Rayleigh-Streuungskomponente und eine Brillouin-Streuungskomponente umfasst; und

Interferieren des lokalen Oszillatorsignals mit dem gestreuten Signal durch die erste Detektorstufe, um ein Ausgangssignal zu erzeugen, das eine erste Komponente bei einer ersten Frequenz, die einer Frequenzdifferenz zwischen der ersten lokalen Oszillatorkomponente und der Rayleigh-Streuungskomponente entspricht, und eine zweite Komponente bei einer zweiten Frequenz, die einer Frequenzdifferenz zwischen der zweiten lokalen Oszillatorkomponente und der Brillouin-Streuungskomponente entspricht, aufweist.

11. Verfahren nach Anspruch 10, wobei die erste Detektorstufe eine Detektionsbandbreite aufweist, die die erste Frequenz abdeckt, wobei das Verfahren ferner Folgendes umfasst:
Einstellen der Frequenzverschiebung der zweiten Komponente des lokalen Oszillatorsignals relativ zu der Lichtquelle derart, dass die zweite Frequenz innerhalb der Detektionsbandbreite liegt.

12. Verfahren nach Anspruch 10 oder 11, ferner Folgendes umfassend:

Alternieren über der Zeit zwischen einem ersten Schritt, in dem die Sendestufe ein erstes Testsignal erzeugt, einem zweiten Schritt, in dem die Sendestufe ein zweites Testsignal erzeugt, wobei das erste Testsignal und das zweite Testsignal eine unterschiedliche Eigenschaft aufweisen; und gegebenenfalls

ferner umfassend das Variieren einer Frequenzverschiebung, die an das zweite Testsignal angelegt wird, bei darauffolgenden Wiederholungen des zweiten Schritts; und gegebenenfalls

ferner umfassend das Bestimmen eines Verlustprofils des optischen Pfads beruhend auf einem Mittelwert der Rayleigh-Streuungskomponenten, die über mehrere Wiederholungen des zweiten Schritts erhalten wurden.

13. Verfahren nach einem der Ansprüche 10 bis 12, wobei das gestreute Signal ferner eine Raman-Streuungskomponente umfasst, wobei das Verfahren ferner Folgendes umfasst:

Teilen des gestreuten Signals durch einen Wellenlängenteiler (52) derart, dass die erste Streuungskomponente und die zweite Streuungskomponente an die erste Detektorstufe durchgelassen werden und dass die Raman-Streuungskomponente an eine zweite Detektorstufe (404) durchgelassen wird;

Teilen der Raman-Streuungskomponente in eine Stokes-Komponente und eine Anti-Stokes-Komponente an der zweiten Detektorstufe und Detektieren einer Amplitude von jeder aus der Stokes-Komponente und der Anti-Stokes-Komponente.

14. Verfahren zum Betreiben eines optischen Messsystems (10, 300, 400), wobei das Verfahren Folgendes umfasst:

Erzeugen eines Lichtsignals unter Verwendung einer kohärenten Lichtquelle (12) und Übertragen des Lichtsignals an eine Sendestufe (14);

Erzeugen eines gepulsten Testsignals an der Sendestufe und Aussenden des Testsignals entlang eines optischen Pfads, wobei das Testsignal eine erste Testsignalkomponente und eine zweite Testsignalkomponente, die relativ zur ersten Testsignalkomponente frequenzverschoben ist, umfasst;

Erzeugen eines lokalen Oszillatorsignals an einer lokalen Oszillatorstufe (16);

Empfangen des lokalen Oszillatorsignals von der lokalen Oszillatorstufe und eines gestreuten Signals von dem optischen Pfad an einer ersten Detektorstufe (28), wobei das gestreute Signal eine Rayleigh-Streuungskomponente, die aus dem Streuen der ersten Testsignalkomponente resultiert, und eine Brillouin-Streuungskomponente, die aus dem Streuen der zweiten Testsignalkomponente resultiert, umfasst; und

Interferieren des lokalen Oszillatorsignals mit dem gestreuten Signal durch die erste Detektorstufe, um ein Ausgangssignal zu erzeugen, das eine erste Komponente bei einer ersten Frequenz, die einer Frequenzdifferenz zwischen dem lokalen Oszillatorsignal und der Rayleigh-Streuungskomponente entspricht, und eine zweite Komponente bei einer zweiten Frequenz, die einer Frequenzdifferenz zwischen dem lokalen Oszillatorsignal und der Brillouin-Streuungskomponente entspricht, aufweist.

15. Verfahren zum Betreiben eines optischen Messsystems (400), wobei das Verfahren Folgendes umfasst:

Erzeugen eines Lichtsignals unter Verwendung einer kohärenten Lichtquelle (12) und Übertragen des Lichtsignals an eine Sendestufe;
Erzeugen eines gepulsten Testsignals an der Sendestufe (14) und Aussenden des Testsignals entlang eines optischen Pfads;
Erzeugen eines lokalen Oszillatorsignals an einer lokalen Oszillatorstufe (16);
Empfangen eines gestreuten Signals von dem optischen Pfad an einem Wellenlängenteiler (52) und Teilen des gestreuten Signals in eine erste Streuungskomponente, die an eine erste Detektorstufe (28) durchgelassen wird, und eine Raman-Streuungskomponente, die an eine zweite Detektorstufe (404) durchgelassen wird;
Interferieren des lokalen Oszillatorsignals mit dem gestreuten Signal an der ersten Detektorstufe, um ein Ausgangssignal zu erzeugen, das eine Frequenz aufweist, welche einer Frequenzdifferenz zwischen dem lokalen Oszillatorsignal und der ersten Streuungskomponente entspricht;
Teilen der Raman-Streuungskomponente in eine Stokes-Komponente und eine Anti-Stokes-Komponente an der zweiten Detektorstufe und Detektieren einer Amplitude von jeder aus der Stokes-Komponente und der Anti-Stokes-Komponente; und wobei gegebenenfalls
die erste Streuungskomponente eine Rayleigh-Streuungskomponente oder eine Brillouin-Streuungskomponente ist.

**Revendications**

1. Système de mesure optique (10, 300, 400), comprenant :

une source de lumière cohérente (12) configurée pour générer un signal lumineux;
un étage de lancement (14) configuré pour recevoir le signal lumineux provenant de la source de lumière, générer un signal d'essai pulsé et lancer le signal d'essai le long d'un chemin optique (1000) ;
un étage d'oscillateur local (16) configuré pour générer un signal d'oscillateur local, dans lequel le signal d'oscillateur local comprend une première composante d'oscillateur local et une deuxième composante d'oscillateur local décalée en fréquence par rapport à la première composante d'oscillateur local; et
un premier étage de détecteur (28) configuré pour :

recevoir le signal d'oscillateur local provenant de l'étage d'oscillateur local et un signal diffusé provenant du chemin optique, dans lequel le signal diffusé comprend une composante de diffusion Rayleigh et une composante de diffusion Brillouin; et
brouiller le signal d'oscillateur local avec le signal diffusé pour produire un signal de sortie ayant une première composante à une première fréquence correspondant à une différence de fréquence entre la première composante d'oscillateur local et la composante de diffusion Rayleigh, et une deuxième composante à une deuxième fréquence correspondant à une différence de fréquence entre la deuxième composante d'oscillateur local et la composante de diffusion Brillouin.

2. Système de mesure optique selon la revendication 1, dans lequel l'étage d'oscillateur local comprend un modulateur à bande latérale unique (30) qui est configuré pour recevoir le signal lumineux provenant de la source de lumière et générer la deuxième composante d'oscillateur local; et éventuellement
dans lequel le modulateur à bande latérale unique est en outre configuré pour ne pas supprimer totalement le signal lumineux reçu en provenance de la source de lumière, de sorte que la première composante d'oscillateur local correspond à une version non totalement supprimée du signal lumineux provenant de la source de lumière.

3. Système de mesure optique selon l'une quelconque des revendications précédentes, dans lequel le premier étage de détecteur a une largeur de bande de détection qui est configurée pour couvrir la première fréquence, et dans lequel le décalage de fréquence de la deuxième composante d'oscillateur local est réglé de sorte que la deuxième fréquence se situe dans la largeur de bande de détection; et éventuellement
dans lequel la largeur de bande de détection est comprise entre 100 MHz et 2 GHz.

4. Système de mesure optique selon l'une quelconque des revendications précédentes, dans lequel la deuxième composante d'oscillateur local est décalée en fréquence par rapport à la source de lumière d'une fréquence dans la plage comprise entre 8 GHz et 12 GHz; et/ou

dans lequel l'étage de lancement est configuré pour décaler en fréquence le signal d'essai par rapport à la source de lumière d'une fréquence dans la plage comprise entre 50 MHz et 500 MHz.

**5.** Système de mesure optique selon l'une quelconque des revendications précédentes, dans lequel :

le système est configuré pour alterner dans le temps entre une première étape de détection de la première composante de diffusion et une deuxième étape de détection de la deuxième composante de diffusion; et
l'étage de lancement est configuré pour générer un premier signal d'essai dans la première étape et un deuxième signal d'essai dans la deuxième étape, le premier signal d'essai et le deuxième signal d'essai ayant une propriété différente; et éventuellement,
dans lequel le système est configuré pour commander l'étage de lancement afin de faire varier un décalage de fréquence appliqué au deuxième signal d'essai lors d'itérations successives de la deuxième étape.

**6.** Système de mesure optique selon l'une quelconque des revendications précédentes, dans lequel l'étage de lancement comprend une boucle régénérative (302) configurée pour fournir une partie du signal d'essai pulsé sous la forme d'une rétroaction positive pour l'étage de lancement.

**7.** Système de mesure optique selon l'une quelconque des revendications précédentes, dans lequel le signal diffusé comprend en outre une composante de diffusion Raman, le système comprenant en outre :

un deuxième étage de détecteur (404); et
un séparateur de longueur d'onde (52) configuré pour diviser le signal diffusé de sorte que la première composante de diffusion et la deuxième composante de diffusion sont transmises au premier étage de détecteur, et de sorte que la composante de diffusion Raman est transmise au deuxième étage de détecteur;
dans lequel le deuxième étage de détecteur est configuré pour diviser la composante de diffusion Raman en une composante Stokes et une composante Anti-Stokes, et pour détecter une amplitude de chacune de la composante Stokes et de la composante Anti-Stokes.

**8.** Système de mesure optique (10, 300, 400), comprenant :

une source de lumière cohérente (12) configurée pour générer un signal lumineux;
un étage de lancement (14) configuré pour recevoir le signal lumineux provenant de la source de lumière, générer un signal d'essai pulsé et lancer le signal d'essai le long d'un chemin optique (1000), dans lequel le signal d'essai comprend une première composante de signal d'essai et une deuxième composante de signal d'essai décalée en fréquence par rapport à la première composante de signal d'essai;
un étage d'oscillateur local (16) configuré pour générer un signal d'oscillateur local; et
un premier étage de détecteur (28) configuré pour :

recevoir le signal d'oscillateur local provenant de l'étage d'oscillateur local et un signal diffusé provenant du chemin optique, dans lequel le signal diffusé comprend une composante de diffusion Rayleigh résultant de la diffusion de la première composante de signal d'essai et une composante de diffusion Brillouin résultant de la diffusion de la deuxième composante de signal d'essai; et
brouiller le signal d'oscillateur local avec le signal diffusé pour produire un signal de sortie ayant une première composante à une première fréquence correspondant à une différence de fréquence entre le signal d'oscillateur local et la composante de diffusion Rayleigh, et une deuxième composante à une deuxième fréquence correspondant à une différence de fréquence entre le signal d'oscillateur local et la composante de diffusion Brillouin.

**9.** Système de mesure optique (400), comprenant :

une source de lumière cohérente (12) configurée pour générer un signal lumineux;
un étage de lancement (14) configuré pour recevoir le signal lumineux provenant de la source de lumière, générer un signal d'essai pulsé et lancer le signal d'essai le long d'un chemin optique;
un étage d'oscillateur local (16) configuré pour générer un signal d'oscillateur local;
un premier étage de détecteur (28) et un deuxième étage de détecteur (404); et
un séparateur de longueur d'onde (52) configuré pour recevoir un signal diffusé provenant du chemin optique et diviser le signal diffusé en une première composante de diffusion qui est transmise au premier étage de détecteur et une composante de diffusion Raman qui est transmise au deuxième étage de détecteur;

dans lequel le premier étage de détecteur est configuré pour brouiller le signal d'oscillateur local avec le signal diffusé afin de produire un signal de sortie ayant une fréquence correspondant à une différence de fréquence entre le signal d'oscillateur local et la première composante de diffusion;

dans lequel le deuxième étage de détecteur est configuré pour diviser la composante de diffusion Raman en une composante Stokes et une composante Anti-Stokes, et pour détecter une amplitude de chacune de la composante Stokes et de la composante Anti-Stokes; et éventuellement

dans lequel la première composante de diffusion est une composante de diffusion Rayleigh ou une composante de diffusion Brillouin.

10. Procédé de fonctionnement d'un système de mesure optique (10, 300, 400), le procédé comprenant le fait de :

générer, à l'aide d'une source de lumière cohérente (12), un signal lumineux, et acheminer le signal lumineux vers un étage de lancement (14);

générer, au niveau de l'étage de lancement, un signal d'essai pulsé et lancer le signal d'essai le long d'un chemin optique (1000) ;

générer, au niveau d'un étage d'oscillateur local (16), un signal d'oscillateur local, dans lequel le signal d'oscillateur local comprend une première composante d'oscillateur local et une deuxième composante d'oscillateur local décalée en fréquence par rapport à la première composante d'oscillateur local;

recevoir, au niveau d'un premier étage de détecteur (28), le signal d'oscillateur local provenant de l'étage d'oscillateur local et un signal diffusé provenant du chemin optique, dans lequel le signal diffusé comprend une composante de diffusion Rayleigh et une composante de diffusion Brillouin; et

brouiller, par le biais du premier étage de détecteur, le signal d'oscillateur local avec le signal diffusé pour produire un signal de sortie ayant une première composante à une première fréquence correspondant à une différence de fréquence entre la première composante d'oscillateur local et la composante de diffusion Rayleigh, et une deuxième composante à une deuxième fréquence correspondant à une différence de fréquence entre la deuxième composante d'oscillateur local et la composante de diffusion Brillouin.

11. Procédé selon la revendication 10, dans lequel le premier étage de détecteur a une largeur de bande de détection qui couvre la première fréquence, le procédé comprenant en outre le fait de :
régler le décalage de fréquence de la deuxième composante du signal d'oscillateur local par rapport à la source de lumière de sorte que la deuxième fréquence se situe dans la largeur de bande de détection.

12. Procédé selon la revendication 10 ou 11, comprenant en outre le fait de :

alterner dans le temps entre une première étape dans laquelle l'étage de lancement génère un premier signal d'essai et une deuxième étape dans laquelle l'étage de lancement génère un deuxième signal d'essai, le premier signal d'essai et le deuxième signal d'essai ayant une propriété différente; et éventuellement

comprenant en outre le fait de faire varier un décalage de fréquence appliqué au deuxième signal d'essai lors d'itérations successives de la deuxième étape; et éventuellement

comprenant en outre le fait de déterminer un profil de perte du chemin optique sur la base d'une moyenne des composantes de diffusion Rayleigh obtenues au cours de multiples itérations de la deuxième étape.

13. Procédé selon l'une quelconque des revendications 10 à 12, dans lequel le signal diffusé comprend en outre une composante de diffusion Raman, le procédé comprenant en outre le fait de :

diviser, à l'aide d'un séparateur de longueur d'onde (52), le signal diffusé, de sorte que la première composante de diffusion et la deuxième composante de diffusion sont transmises au premier étage de détecteur, et de sorte que la composante de diffusion Raman est transmise à un deuxième étage de détecteur (404);

diviser, au niveau du deuxième étage de détecteur, la composante de diffusion Raman en une composante Stokes et une composante Anti-Stokes, et détecter une amplitude de chacune de la composante Stokes et de la composante Anti-Stokes.

14. Procédé de fonctionnement d'un système de mesure optique (10, 300, 400), le procédé comprenant le fait de :

générer, à l'aide d'une source de lumière cohérente (12), un signal lumineux, et acheminer le signal lumineux vers un étage de lancement (14);

générer, au niveau de l'étage de lancement, un signal d'essai pulsé et lancer le signal d'essai le long d'un chemin optique, le signal d'essai comprenant une première composante de signal d'essai et une deuxième composante de signal d'essai décalée en fréquence par rapport à la première composante de signal d'essai;

générer, au niveau d'un étage d'oscillateur local (16), un signal d'oscillateur local;

recevoir, au niveau d'un premier étage de détecteur (28), le signal d'oscillateur local provenant de l'étage d'oscillateur local et un signal diffusé provenant du chemin optique, dans lequel le signal diffusé comprend une composante de diffusion Rayleigh résultant de la diffusion de la première composante de signal d'essai et une composante de diffusion Brillouin résultant de la diffusion de la deuxième composante de signal d'essai; et

brouiller, par le biais du premier étage de détecteur, le signal d'oscillateur local avec le signal diffusé pour produire un signal de sortie ayant une première composante à une première fréquence correspondant à une différence de fréquence entre le signal d'oscillateur local et la composante de diffusion Rayleigh, et une deuxième composante à une deuxième fréquence correspondant à une différence de fréquence entre le signal d'oscillateur local et la composante de diffusion Brillouin.

**15.** Procédé de fonctionnement d'un système de mesure optique (400), le procédé comprenant le fait de :

générer, à l'aide d'une source de lumière cohérente (12), un signal lumineux, et acheminer le signal lumineux vers un étage de lancement;

générer, au niveau de l'étage de lancement (14), un signal d'essai pulsé et lancer le signal d'essai le long d'un chemin optique;

générer, au niveau d'un étage d'oscillateur local (16), un signal d'oscillateur local;

recevoir, au niveau d'un séparateur de longueur d'onde (52), un signal diffusé provenant du chemin optique, et diviser le signal diffusé en une première composante de diffusion transmise à un premier étage de détecteur (28) et une composante de diffusion Raman transmise à un deuxième étage de détecteur (404);

brouiller, au niveau du premier étage de détecteur, le signal d'oscillateur local avec le signal diffusé pour produire un signal de sortie ayant une fréquence correspondant à une différence de fréquence entre le signal d'oscillateur local et la première composante de diffusion; et

diviser, au niveau du deuxième étage de détecteur, la composante de diffusion Raman en une composante Stokes et une composante Anti-Stokes, et détecter une amplitude de chacune de la composante Stokes et de la composante Anti-Stokes; et éventuellement,

dans lequel la première composante de diffusion est une composante de diffusion Rayleigh ou une composante de diffusion Brillouin.

Fig. 1

Fig. 2a

Fig. 2b

EP 4 460 679 B1

Fig. 3

Fig. 4

EP 4 460 679 B1

Fig. 5a

Fig. 5b

EP 4 460 679 B1

Fig. 6

EP 4 460 679 B1

Fig. 7a

Fig. 7b

Fig. 7c

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 110470327 A
- WO 2017037453 A1
- WO 2020016556 A1
- WO 2017077257 A1
- GB 2588177 A

### Non-patent literature cited in the description

- Distributed fibre sensing using microwave heterodyne detection of spontaneous Brillouin backscatter. **S. M. MAUGHAN**. PhD thesis. University of Southampton